# EUROPÄISCHE PATENTSCHRIFT

(11) **EP 4 598 760 B1**
(45) Veröffentlichungstag und Bekanntmachung des Hinweises auf die Patenterteilung: **14.10.2026**
(21) Anmeldenummer: 23776022.8
(22) Anmeldetag: 20.09.2023
(51) Int. Cl.: B60J 3/04, B32B 17/10

(54) **VERFAHREN ZUR STEUERUNG EINES PDLC-FUNKTIONSELEMENTS MIT MEHREREN UNABHÄNGIG SCHALTBAREN SCHALTBEREICHEN**
METHOD FOR CONTROLLING A PDLC FUNCTIONAL ELEMENT COMPRISING A PLURALITY OF INDEPENDENTLY SWITCHABLE SWITCHING REGIONS
PROCÉDÉ DE COMMANDE D'UN ÉLÉMENT FONCTIONNEL PDLC COMPORTANT PLUSIEURS ZONES DE COMMUTATION POUVANT ÊTRE COMMUTABLES INDÉPENDAMMENT

(30) Priorität: 07.10.2022 EP 22200279
(43) Veröffentlichungstag der Anmeldung: 13.08.2025
(73) Patentinhaber: Saint-Gobain Sekurit France, 60150 Thourotte (FR)
(72) Erfinder: ZEICHNER, Achim, 52134 Herzogenrath (DE); DO ROSARIO, Jefferson, 52134 Herzogenrath (DE); ZHANG, Huixing, 52134 Herzogenrath (DE); ASCHENBRENNER, Tobias Peter, 52134 Herzogenrath (DE)
(74) Vertreter: Gebauer, Dieter Edmund
(86) Internationale Anmeldenummer: PCT/EP2023/075920
(87) Internationale Veröffentlichungsnummer: WO 2024/074307

(56) Entgegenhaltungen:
- EP-A1- 3 910 412
- DE-U1- 202021 105 089

## Beschreibung

Die Erfindung betrifft ein Verfahren zur Steuerung eines PDLC-Funktionselements mit mehreren unabhängig schaltbaren Schaltbereichen, einer Verglasungseinheit sowie deren Verwendung.

Verglasungseinheiten mit elektrisch steuerbaren optischen Eigenschaften sind als solche bekannt. Sie umfassen Verbundscheiben, welche mit Funktionselementen ausgestattet, deren optische Eigenschaften durch eine angelegte elektrische Spannung verändert werden können. Das Anlegen der elektrischen Spannung erfolgt über eine Steuereinheit, welche an zwei Flächenelektroden des Funktionselements angeschlossen ist, zwischen denen sich die aktive Schicht des Funktionselements befindet. Ein Beispiel für solche Funktionselemente sind SPD-Funktionselemente (*suspended particle device*), die beispielsweise aus EP 0876608 B1 und WO 2011033313 A1 bekannt sind. Durch die angelegte Spannung lässt sich die Transmission von sichtbarem Licht durch SPD-Funktionselemente steuern. Ein weiteres Beispiel sind Standard-PDLC-Funktionselemente (*polymer dispersed liquid crystal*), die beispielsweise aus DE 102008026339 A1 bekannt sind. Die aktive Schicht enthält dabei Flüssigkristalle, welche in eine Polymermatrix eingelagert sind. Im Schaltzustand "off" wird keine Spannung angelegt, so sind die Flüssigkristalle ungeordnet ausgerichtet, was zu einer starken Streuung des durch die aktive Schicht tretenden Lichts führt. Im Schaltzustand "on" wird an die Flächenelektroden eine Spannung angelegt, so dass sich Flüssigkristalle in einer gemeinsamen Richtung ausrichten und die Streuung von Licht durch die aktive Schicht erniedrigt wird. Das PDLC-Funktionselement wirkt also weniger durch eine Herabsetzung der Gesamttransmission als durch eine Erhöhung der Streuung, wodurch die freie Durchsicht verhindert oder ein Blendschutz gewährleistet werden kann. Weiterhin sind elektrochrome Funktionselemente bekannt, beispielsweise aus US 20120026573 A1, WO 2010147494 A1 und EP 1862849 A1 und WO 2012007334 A1, bei denen eine Transmissionsänderung durch elektrochemische Prozesse erfolgt, welche durch die angelegte elektrische Spannung induziert wird.

Solche Verglasungseinheiten können beispielsweise als Fahrzeugscheiben verwendet werden, deren optische Eigenschaften dann elektrisch gesteuert werden können. Sie können beispielsweise als Dachscheiben verwendet werden, um Sonneneinstrahlung zu verringern oder störende Reflexionen abzumindern. Solche Dachscheiben sind beispielsweise aus DE 10043141 A1 und EP 3456913 A1 bekannt. Ebenfalls wurden Windschutzscheiben vorgeschlagen, bei denen durch ein schaltbares Funktionselement eine elektrisch steuerbare Sonnenblende realisiert ist, um die herkömmliche mechanisch klappbare Sonnenblende in Kraftfahrzeugen zu ersetzen. Windschutzscheiben mit elektrisch steuerbaren Sonnenblenden sind beispielsweise bekannt aus DE 102013001334 A1, DE 102005049081 B3, DE 102005007427 A1 und DE 102007027296 A1.

Es ist ebenfalls bekannt, solche Verglasungseinheiten, beziehungsweise die schaltbaren Funktionselemente in den Verglasungseinheiten, mit mehreren Schaltbereichen zu versehen, deren optische Eigenschaften unabhängig voneinander geschaltet werden können. So kann ein Bereich des Funktionselements selektiv abgedunkelt oder mit einer hohen Lichtstreuung versehen werden, während andere Bereiche hell oder transparent bleiben. Verglasungseinheiten mit unabhängigen Schaltbereichen und ein Verfahren zu ihrer Herstellung sind beispielsweise aus DE 202021105089 U1, WO 2014072137 A1 oder WO 2017157626 A1 bekannt.

Die unabhängigen Schaltbereiche werden typischerweise dadurch ausgebildet, dass eine der Flächenelektroden durch Isolierungslinien in voneinander getrennte Schaltbereiche ((Elektroden-)Segmente) aufgeteilt wird, welche jeweils unabhängig voneinander mit der Steuereinheit verbunden sind und daher unabhängig angesteuert werden können, während die andere Flächenelektrode beispielsweise keine Isolierungslinien aufweist. Die Isolierungslinien werden typischerweise durch Laserbearbeitung in die Flächenelektrode eingebracht. Die Flächenelektroden können nicht hinsichtlich einer optimalen elektrischen Leitfähigkeit ausgewählt werden, da sie transparent sein müssen, um die Durchsicht durch die Verbundscheibe zu gewährleisten. Typischerweise werden ITO-Schichten als Flächenelektroden verwendet, welche eine geringe Leitfähigkeit beziehungsweise einen hohen elektrischen Widerstand aufweisen.

Eine elektrische Steuereinheit zur Ansteuerung von Funktionselementen mit elektrisch steuerbaren optischen Eigenschaften ist beispielsweise aus der EP 3910412 A1 bekannt.

Der vorliegenden Erfindung liegt die Aufgabe zugrunde, ein verbessertes Verfahren zur Steuerung eines PDLC-Funktionselements mit mindestens zwei benachbarten, unabhängig schaltbaren Schaltbereichen bereitzustellen.

Die Aufgabe wird erfindungsgemäß gelöst durch ein Verfahren zur Steuerung eines PDLC-Funktionselements mit mindestens zwei benachbarten, unabhängig schaltbaren Schaltbereichen, wobei durch eine Steuereinheit Schaltzustände (on, off) an die Schaltbereiche angelegt werden können, wobei
A) an mindestens zwei benachbarte Schaltbereiche unterschiedliche Schaltzustände (on, off) angelegt werden;
B) durch einen Benutzer oder eine automatische Steuerung ein Signal zur Änderung der Schaltzustände (on, off) in den einzelnen Schaltbereichen an die Steuereinheit gesendet wird,
C) zunächst alle Schaltbereiche auf den Schaltzustand "on" gesetzt werden und
D) anschließend die geänderten Schaltzustände an die Schaltbereiche angelegt werden.

Es versteht sich, dass in Schritt D) Schaltbereiche die auf "on" gesetzt werden sollen, auf "on" bleiben können.

Das erfindungsgemäße Verfahren zeichnet sich dadurch aus, dass in einem (Zwischen-)Schritt C alle Schaltbereiche auf den einheitlichen Schaltzustand "on" gesetzt werden, bevor eine neue Schaltzustandsverteilung an die Schaltbereiche angelegt werden. Dadurch wird der ursprüngliche Memory-Zustand unterschiedlicher Schaltzustände in den Schaltbereichen wiederhergestellt und alle Schaltbereiche zeigen wieder die gleichen optischen Eigenschaften.

In einer vorteilhaften Ausführungsform des erfindungsgemäßen Verfahrens wird in Schritt C der Schaltzustand "on" in allen Schaltbereichen gleichzeitig angelegt.

In einer vorteilhaften Ausführungsform des erfindungsgemäßen Verfahrens wird in Schritt C der Schaltzustand "on" in den Schaltbereichen zu unterschiedlichen Zeiten angelegt. Bevorzugt wird er Schaltzustand "on" in den Schaltbereichen in einer rollierenden Funktion angelegt, d.h. beispielsweise durch Einschalten ("on"-Schaltzustand) von einer Seite des PDLC-Funktionselements ins konsekutiver Abfolge der einzelnen Schaltbereiche bis zur gegenüberliegenden Seite und besonders bevorzugt wieder zurück. Es versteht sich, dass dieser Vorgang auch mehrmals direkt hintereinander durchgeführt werden kann.

Alternativ können die Schaltbereiche in alternierender Abfolge geschaltet werden. Beispielsweise bei einer Verglasung mit neun Schaltbereichen können zuerst der erste, dritte, fünfte, siebte und neunte Schaltbereich auf "on" geschaltet werden und danach diese Bereiche auf "off" und im Wechsel der zweite, vierte, sechste und achte Schaltbereich.

Es versteht sich, dass weitere Abfolgen geschaltet werden können, beispielsweise von gegenüberliegenden Seiten fortlaufend zur Mitte, d.h. bei obigem Beispiel mit 9 Schaltberbereichen, mit den Schaltbereichen eins und neun beginnend, anschließend zwei und acht, dann drei und sieben, dann vier und sechs und abschließend der mittige Schaltbereich fünf.

In einer vorteilhaften Ausführungsform des erfindungsgemäßen Verfahrens wird Schritt D erst durchgeführt wird, wenn jeder Schaltbereich mindestens einmal auf den Schaltzustand "on" gesetzt wurde.

In einer weiteren vorteilhaften Ausführungsform des erfindungsgemäßen Verfahrens wird in Schritt C der Schaltzustand "on" in den Schaltbereichen für eine Zeitdauer t von größer oder gleich 1/60 s, bevorzugt größer oder gleich 0.5 s und insbesondere für 0.5 s bis 10 s gehalten. Dies sorgt für ein näherungsweise vollständig wiederhergestellten Memory-Zustand und damit für eine ausreichende Homogenisierung der optischen Eigenschaften der Schaltbereiche.

Die Aufgabe wird weiterhin erfindungsgemäß gelöst durch eine Verglasungseinheit mit PDLC-Funktionselement, umfassend
- eine Verbundscheibe, umfassend:
   ∘ eine Außenscheibe und eine Innenscheibe, die über mindestens eine thermoplastische Zwischenschicht miteinander verbunden sind,
   ∘ ein PDLC-Funktionselement mit mindestens zwei benachbarten, unabhängig schaltbaren Schaltbereichen, welches zwischen der Außenscheibe und der Innenscheibe angeordnet ist, wobei
   ∘ das PDLC-Funktionselement mindestens zwei benachbarten, unabhängig schaltbare Schaltbereiche aufweist,
   und
- eine Steuereinheit zur elektrischen Steuerung der optischen Eigenschaften der Schaltbereiche des PDLC-Funktionselements,
wobei die Steuereinheit dazu vorgesehen ist, das erfindungsgemäße Verfahren durchzuführen.

In einer vorteilhaften Ausgestaltung umfasst die erfindungsgemäße Verglasungseinheit eine Verbundscheibe, wobei die Verbundscheibe eine Außenscheibe und eine Innenscheibe, die über eine thermoplastische Zwischenschicht miteinander verbunden sind, und ein elektrisch steuerbares Funktionselement, welches zwischen der Außenscheibe und der Innenscheibe angeordnet ist, umfasst. Das Funktionselement weist eine aktive Schicht mit elektrisch steuerbaren optischen Eigenschaften zwischen einer ersten Flächenelektrode und einer zweiten Flächenelektrode auf. Die Steuereinheit ist derart ausgebildet, die optischen Eigenschaften des Funktionselements zu steuern.

In einer weiteren vorteilhaften Ausgestaltung umfasst das PDLC-Funktionselement eine aktive Schicht mit elektrisch steuerbaren optischen Eigenschaften und ist zwischen einer ersten Flächenelektrode und einer zweiten Flächenelektrode angeordnet. Vorteilhafterweise ist die erste Flächenelektrode durch mindestens eine Isolierungslinie in mindestens zwei getrennte Elektrodensegmente aufgeteilt, wobei jedes Elektrodensegment einen unabhängig schaltbaren Schaltbereich bildet.

In einer weiteren vorteilhaften Ausgestaltung sind jedes Elektrodensegment der ersten Flächenelektrode und die zweite Flächenelektrode elektrisch mit der Steuereinheit verbunden, so dass zwischen jedem Elektrodensegment der ersten Flächenelektrode und der zweiten Flächenelektrode unabhängig voneinander eine elektrische Spannung angelegt werden kann, um die optischen Eigenschaften des dazwischen befindlichen Abschnitts der aktiven Schicht zu steuern.

In einer weiteren vorteilhaften Ausgestaltung weist die zweite Flächenelektrode keine Isolierungslinien oder eine geringere Anzahl von Isolierungslinien auf und infolgedessen eine geringere Anzahl von Elektrodensegmenten auf als die erste Flächenelektrode, so dass mindestens einem Elektrodensegment der zweiten Flächenelektrode mehrere Elektrodensegmente der ersten Flächenelektrode zugeordnet sind.

Der Erfindung liegt die Erkenntnis zugrunde, dass das Schaltverhalten und die optischen Eigenschaften wie Diffusität und Transmission typischer PDLC-Funktionselemente von deren Beschaltung abhängig ist. Das erfindungsgemäße Verfahren und die erfindungsgemäße Verglasungseinheit verhindern das Auftreten abweichender optischer Eigenschaften des PDLC-Funktionselementes im ausgeschalteten Zustand ("off"-Schaltzustand) verursacht durch den so genannten "Memory-Effekt" von PDLC-Funktionselementen. Dieser Memory-Effekt ist ein sichtbarer Effekt, der darin besteht, dass ein Schaltbereich (Elektrodensegment), der vor kurzem eingeschaltet ("on"-Schaltzustand) wurde, im darauffolgenden ausgeschalteten Zustand ("off"-Schaltzustand) eine andere Opazität und/oder eine anderes Streuverhalten aufweist als ein benachbarter PDLC-Schaltbereich, der sehr lange ausgeschaltet ("off"-Schaltzustand) war und/oder eine andere Schalthistorie aufweist.

Abhilfe schafft das kurzeitige Einschalten ("on"-Schaltzustand) aller Schaltbereiche, was zu einer Wiederherstellung des ursprünglichen Memory-Zustands und zu einer Homogenisierung der optischen Eigenschaften führt.

Beispielsweise: Wenn bei einem Standard-PDLC-Funktionselement alle ungeraden Schaltbereiche einer beispielsweise als Dachscheibe ausgebildeten Verglasungseinheit mit neun Schaltbereichen 5 Minuten lang eingeschaltet waren und danach das gesamte Dach ausgeschaltet (undurchsichtig) wird, kann der Beifahrer im Auto deutlich einen Unterschied in der Deckkraft zwischen den ungeraden und den geraden Schaltbereiche erkennen. Um diese für den Kunden unbefriedigende Erfahrung zu verhindern, können verschiedene Gegenmaßnahmen auf Systemebene geschaffen werden, beispielsweise der Einführung einer homogenisierenden Sequenz (z.B. wie das Schalten aller Schaltbereiche in einer rollierenden Funktion) nach bestimmten Schaltvorgängen; eine Start- und Endsequenz oder das gleichzeitige Ein- und Ausschalten aller Schaltbereiche. Mit anderen Worten: Zur Erzielung homogener optischer Eigenschaften muss jeder Schaltbereich regelmäßig geschaltet werden, um alle Schaltbereich in einem ähnlichen Zustand der Trübung oder Transmission zu halten.

Die Verglasungseinheit und das Verfahren werden im Folgenden gemeinsam vorgestellt, wobei sich Erläuterungen und bevorzugte Ausgestaltungen gleichermaßen auf Verglasungseinheit und Verfahren beziehen. Sind bevorzugte Merkmale im Zusammenhang mit dem Verfahren beschrieben, so ergibt sich daraus, dass auch die Verglasungseinheit bevorzugt entsprechend ausgelegt und geeignet ist. Sind umgekehrt bevorzugte Merkmale im Zusammenhang mit der Verglasungseinheit beschrieben, so ergibt sich daraus, dass auch das Verfahren bevorzugt entsprechend durchgeführt wird.

Die erfindungsgemäße Verbundscheibe, insbesondere als Teil einer erfindungsgemäßen Verglasungseinheit, umfasst mindestens eine Außenscheibe und eine Innenscheibe, die über mindestens eine thermoplastische Zwischenschicht miteinander verbunden sind. Die Verbundscheibe ist dafür vorgesehen, in einer Fensteröffnung (insbesondere einer Fenster- oder Dachöffnung eines Fahrzeugs, alternativ aber auch einer Fensteröffnung eines Gebäudes oder eines Raums) den Innenraum gegenüber der äußeren Umgebung abzutrennen. Mit Innenscheibe wird im Sinne der Erfindung, die dem Innenraum zugewandte Scheibe bezeichnet. Mit Außenscheibe wird die der äußeren Umgebung zugewandte Scheibe bezeichnet. Die Außenscheibe und die Innenscheibe weisen jeweils eine außenseitige und eine innenraumseitige Oberfläche auf und eine dazwischen verlaufende, umlaufende Seitenkantenfläche. Mit außenseitiger Oberfläche wird im Sinne der Erfindung diejenige Hauptfläche bezeichnet, welche dafür vorgesehen ist, in Einbaulage der äußeren Umgebung zugewandt zu sein. Mit innenraumseitiger Oberfläche wird im Sinne der Erfindung diejenige Hauptfläche bezeichnet, welche dafür vorgesehen ist, in Einbaulage dem Innenraum zugewandt zu sein. Die innenraumseitige Oberfläche der Außenscheibe und die außenseitige Oberfläche der Innenscheibe sind einander zugewandt und durch die thermoplastische Zwischenschicht miteinander verbunden.

Die erfindungsgemäße Verbundscheibe enthält ein PDLC-Funktionselement mit elektrisch steuerbaren optischen Eigenschaften, das zwischen der Außenscheibe und der Innenscheibe angeordnet, also in die Zwischenschicht eingelagert ist. Das Funktionselement ist bevorzugt zwischen mindestens zwei Schichten von thermoplastischem Material der Zwischenschicht angeordnet, wobei es durch die erste Schicht mit der Außenscheibe und durch die zweite Schicht mit der Innenscheibe verbunden ist. Alternativ kann das Funktionselement aber auch direkt auf der zur Zwischenschicht hingewandten Oberfläche der Außenscheibe oder der Innenscheibe angeordnet sein. Bevorzugt ist die Seitenkante des Funktionselements vollständig von der Zwischenschicht umgeben, so dass sich das Funktionselement nicht bis zur Seitenkante der Verbundscheibe erstreckt und somit keinen Kontakt zur umgebenden Atmosphäre hat.

Das PDLC-Funktionselement umfasst mindestens eine aktive Schicht und zwei Flächenelektroden, die beidseitig der aktiven Schicht angeordnet sind, so dass die aktive Schicht zwischen den Flächenelektroden angeordnet ist. Die Flächenelektroden und die aktive Schicht sind typischerweise im Wesentlichen parallel zu den Oberflächen der Außenscheibe und der Innenscheibe angeordnet. Die aktive Schicht weist die veränderlichen optischen Eigenschaften auf, die durch eine über die Flächenelektroden an die aktive Schicht angelegte elektrische Spannung gesteuert werden können. Unter elektrisch steuerbaren optischen Eigenschaften werden im Sinne der Erfindung insbesondere solche Eigenschaften verstanden, die stufenlos steuerbar sind. Unter dem Schaltzustand des Funktionselements wird dabei im Sinne der Erfindung das Ausmaß bezeichnet, mit dem die optischen Eigenschaften gegenüber dem spannungsfreien Zustand verändert sind. Ein Schaltzustand von 0% entspricht dem spannungsfreien Zustand, ein Schaltzustand von 100% der maximalen Änderung der optischen Eigenschaften. Durch geeignete Wahl der Spannung sind dazwischen stufenlos alle Schaltzustände realisierbar. Ein Schaltzustand von 20% entspricht beispielsweise einer Änderung der optischen Eigenschaften um 20% der maximalen Änderung. Die besagten optischen Eigenschaften betreffen insbesondere die Lichttransmission und/oder das Streuverhalten.

Grundsätzlich ist es aber auch denkbar, dass die elektrisch steuerbaren optischen Eigenschaften nur zwischen zwei diskreten Zuständen geschaltet werden können. Dann existieren nur zwei Schaltzustände, beispielsweise 0% (off) und beispielsweise 100% (on). Ebenso ist es denkbar, dass die elektrisch steuerbaren optischen Eigenschaften zwischen mehr als zwei diskreten Zuständen geschaltet werden können.

Die Flächenelektroden sind bevorzugt transparent, was im Sinne der Erfindung bedeutet, dass sie eine Lichttransmission im sichtbaren Spektralbereich von mindestens 50% aufweisen, bevorzugt mindestens 70%, besonders bevorzugt mindestens 80%. Die Flächenelektroden enthalten bevorzugt zumindest ein Metall, eine Metalllegierung oder ein transparentes leitfähiges Oxid (*transparent conducting oxide,* TCO). Die Flächenelektroden können beispielsweise auf Basis von Silber, Gold, Kupfer, Nickel, Chrom, Wolfram, Indium-Zinnoxid (ITO), Gallium-dotiertem oder Aluminium-dotiertem Zinkoxid und/oder Fluordotiertem oder Antimon-dotiertem Zinnoxid ausgebildet sein, bevorzugt auf Basis von Silber oder ITO. Die Flächenelektroden weisen bevorzugt eine Dicke von 10 nm bis 2 µm auf, besonders bevorzugt von 20 nm bis 1 µm, ganz besonders bevorzugt von 30 nm bis 500 nm.

Die erste Flächenelektrode weist erfindungsgemäß mindestens zwei Segmente (Elektrodensegmente) auf, welche durch eine Isolierungslinie voneinander getrennt sind. Unter der Isolierungslinie wird ein linienartiger Bereich verstanden, in dem das Material der Flächenelektrode nicht vorhanden ist, so dass die angrenzenden Segmente stofflich voneinander getrennt sind und daher elektrisch voneinander isoliert sind. Damit ist gemeint, dass keine direkte elektrische Verbindung zwischen den Elektrodensegmenten besteht, wobei die Elektrodensegmente allerdings über die mit ihnen in Kontakt befindliche aktive Schicht indirekt in gewissem Maße elektrisch leitend miteinander verbunden sein können. Die erste Flächenelektrode kann durch mehrere Isolierungslinien in mehrere Segmente aufgeteilt sein. Jedes Elektrodensegment bildet einen Schaltbereich der Verglasungsanordnung aus. Die Anzahl der Elektrodensegmente kann vom Fachmann den Erfordernissen im Einzelfall entsprechend frei gewählt werden. In einer bevorzugten Ausgestaltung verlaufen die Isolierungslinien im Wesentlichen parallel zueinander und erstrecken sich von einer Seitenkante der Flächenelektrode zur gegenüberliegenden Seitenkante. Es sind aber auch beliebige andere geometrische Formen denkbar.

Zwei nur durch eine Isolierungslinie getrennte Elektrodensegmente bilden einen im Sinne der Erfindung benachbarten Schaltbereich, der auch als unmittelbar benachbarter Schaltbereich bezeichnet werden kann.

Die Isolierungslinien weisen beispielsweise eine Breite von 5 µm bis 500 µm, insbesondere 20 µm bis 200 µm auf. Sie werden bevorzugt mittels Laserstrahlung in die Flächenelektrode eingebracht. Die Breite der Segmente, also der Abstand benachbarten Isolierungslinien kann vom Fachmann gemäß den Anforderungen im Einzelfall geeignet gewählt werden.

Die zweite Flächenelektrode und die aktive Schicht bilden bevorzugt jeweils eine zusammenhängende, vollständige Schicht, welche nicht durch Isolierungslinien in Segmente aufgeteilt sind. Grundsätzlich ist es aber auch denkbar, dass die zweite Flächenelektrode in geringerem Maße segmentiert ist als die erste Flächenelektrode, also weniger Isolierungslinien und Elektrodensegmente aufweist, so dass mindestens einem Elektrodensegment der zweiten Flächenelektrode mehrere Elektrodensegmente der ersten Flächenelektrode zugeordnet sind. Auch in diesem Fall tritt das Problem des "Cross Talks" auf, was durch den erfindungsgemäßen Ansatz reduziert werden kann. Jede Isolierungslinie der zweiten Flächenelektrode ist in Durchsichtrichtung durch die Verbundscheibe mit einer Isolierungslinie der ersten Flächenelektrode in Deckung angeordnet.

Die Elektrodensegmente der ersten Flächenelektrode sind unabhängig voneinander elektrisch mit der Steuereinheit verbunden, so dass an jedes Elektrodensegment (unabhängig von den anderen Elektrodensegmenten) ein erstes (im Falle einer Wechselspannung zeitlich veränderliches) elektrisches Potential angelegt werden kann, das im Sinne der Erfindung als Schaltpotential bezeichnet wird. Die zweite Flächenelektrode ist ebenfalls elektrisch mit der Steuereinheit verbunden, so dass an die zweite Flächenelektrode insgesamt ein zweites elektrisches Potential angelegt werden kann, das im Sinne der Erfindung als Bezugspotential ("Ground") bezeichnet wird. Sind des erste und das zweite Potential identisch, so liegt im jeweiligen Schaltbereich keine Spannung zwischen den Elektroden an (Schaltzustand off, 0%). Sind des erste und das zweite Potential unterschiedlich, so liegt im jeweiligen Schaltbereich eine Spannung zwischen den Elektroden an, wodurch ein endlicher Schaltzustand erzeugt wird.

In einer Variante der Erfindung ist auch die zweite Flächenelektrode segmentiert, allerdings in geringerem Maße als die erste Flächenelektrode, so dass mindestens einem Elektrodensegment der zweiten Flächenelektrode mehrere Elektrodensegmente der ersten Flächenelektrode zugeordnet sind. In diesem Fall sind auch die Elektrodensegmente der zweiten Flächenelektrode unabhängig voneinander elektrisch mit der Steuereinheit verbunden, so dass an jedes Elektrodensegment (unabhängig von den anderen Elektrodensegmenten) ein zweites elektrisches Potential (Bezugspotential, "Ground") angelegt werden kann. Es existiert aber zumindest ein Elektrodensegment der zweiten Flächenelektrode, welches das Bezugspotential für mehrere Schaltbereiche bereitstellt. Die betroffenen Schaltbereiche sind dadurch unabhängig voneinander steuerbar, dass das Schaltpotential unabhängig voneinander an die Elektrodensegmente der ersten Flächenelektrode angelegt werden kann, während an das zugeordnete Elektrodensegment der zweiten Flächenelektrode insgesamt ein einzelnes Bezugspotential angelegt wird.

Die Steuereinheit ist dafür vorgesehen und geeignet, die optischen Eigenschaften des PDLC-Funktionselements zu steuern. Die Steuereinheit ist elektrisch leitend einerseits mit den Flächenelektroden des Funktionselements verbunden und andererseits mit einer Spannungsquelle. Die Steuereinheit beinhaltet die erforderlichen elektrischen und/oder elektronischen Bauteile, um in Abhängigkeit von einem Schaltzustand die erforderliche Spannung an die Flächenelektroden anzulegen. Der Schaltzustand kann dabei vom Benutzer vorgegeben werden (beispielsweise durch Bedienung eines Schalters, einer Taste oder eines Dreh- oder Schiebereglers), durch Sensoren ermittelt werden und/oder über eine digitale Schnittstelle vom zentralen Steuergerät des Fahrzeugs (falls die Verbundscheibe eine Fahrzeugscheibe ist, üblicherweise LIN-Bus oder CAN-Bus) übermittelt werden. Die Schalter, Tasten, Dreh- oder Schieberegler können beispielsweise in den Armaturen des Fahrzeugs integriert sein, falls die Verbundscheibe eine Fahrzeugscheibe ist. Es können aber auch Berührungsschaltflächen direkt in die Verbundscheibe integriert sein, beispielsweise kapazitive oder resistive Schaltflächen. Alternativ kann das Funktionselement auch durch kontaktfreie Verfahren, beispielsweise durch das Erkennen von Gesten, oder in Abhängigkeit des durch eine Kamera und geeignete Auswerteelektronik festgestellten Zustands von Pupille oder Augenlid gesteuert werden. Die Steuereinheit kann beispielsweise elektronische Prozessoren, Spannungswandler, Transistoren und andere Bauteile umfassen.

Die Spannung, welche an die Flächenelektroden angelegt wird, ist bevorzugt eine Wechselspannung. In einer bevorzugten Ausgestaltung ist die Spannungsquelle eine Gleichspannungsquelle, welche eine Gleichspannung bereitstellt und die Steuereinheit damit versorgt. Diese Situation tritt beispielweise in einem Fahrzeug auf, wenn die Verbundscheibe eine Fahrzeugscheibe ist und an die Bordspannung angeschlossen ist. Die Steuereinheit ist dabei bevorzugt an die Bordelektrik angeschlossen, woher sie ihrerseits die elektrische Spannung und optional die Information über den Schaltzustand bezieht. Die Steuereinheit ist dann mit mindestens einem Wechselrichter ausgestattet, um die Gleichspannung in die Wechselspannung zu wandeln. In einer ersten Ausgestaltung weist die Steuereinheit einen einzelnen Wechselrichter auf. Zur separaten Ansteuerung der Elektrodensegmente der ersten Flächenelektrode weist ein Ausgangspol des Wechselrichters mehrere unabhängige Ausgänge auf, wobei jedes Elektrodensegment an einen der Ausgänge angeschlossen ist. Jedem Schaltbereich ist also ein Ausgang des Wechselrichters zugeordnet und mit dem zugehörigen Elektrodensegment der ersten Flächenelektrode verbunden. Die einzelnen Ausgänge sind typischerweise durch Schalter realisiert, wobei der Wechselrichter eine Spannung erzeugt, welche anschließend geschaltet wird. Diese Schalter können direkt im Wechselrichter integriert sein. Alternativ ist es aber auch möglich, dass der Wechselrichter selbst streng genommen nur einen einzigen Ausgang aufweist, an welchen dann externe Schalter angeschlossen sind, um die Spannung auf die Schaltbereiche zu verteilen. Im Sinne der Erfindung werden auch solche extern angeschlossenen Schalter als Ausgänge des Wechselrichters betrachtet. Die zweite Flächenelektrode ist ebenfalls an den Wechselrichter angeschlossen. In einer zweiten Ausgestaltung weist die Steuereinheit mehrere Wechselrichter auf, wobei zur separaten Ansteuerung der Elektrodensegmente der ersten Flächenelektrode jedes Elektrodensegment an einen eigenen Wechselrichter angeschlossen ist. Jedem Schaltbereich ist also ein Wechselrichter zugeordnet und mit dem zugehörigen Elektrodensegment der ersten Flächenelektrode verbunden. Die erste Ausgestaltung hat den Vorteil, dass sie kostengünstiger und platzsparender ist. Sie hat allerdings den Nachteil, dass die Schaltbereiche lediglich gleichsam digital schaltbar sind zwischen einem Schaltzustand von 0% und einem endlichen Schaltzustand, welcher der gerade anliegenden Ausgangsspannung des Wechselrichters entspricht. Die Schaltbereiche können nicht mit unterschiedlichen endlichen Schaltzuständen versehen werden (gleichsam unabhängig "dimmbar" sein), was bei der zweiten Ausgestaltung problemlos möglich ist.

Der oder die Wechselrichter können derart betrieben werden, dass eine echte Wechselspannung erzeugt wird, inklusive deren negativer Anteile. Dies ist sowohl für den Fall möglich, dass nur ein einzelner Wechselrichter mit unabhängigen Ausgängen vorhanden ist, als auch für den Fall, dass jedem Schaltbereich ein eigener Wechselrichter zugeordnet ist. Da im Falle einer Gleichspannungsquelle, wie beispielsweise im Falle eines Fahrzeugs, allerdings keine negativen Potentiale zur Verfügung stehen, ist diese Lösung technisch aufwändig. Es ist alternativ möglich und häufig bevorzugt, die Wechselspannung gleichsam zu simulieren. Dabei ist die Steuereinheit mit mehreren Wechselrichtern ausgestattet, wobei jedes Elektrodensegment der ersten Flächenelektrode an einen separaten Wechselrichter angeschlossen und die zweite Flächenelektrode an einen weiteren Wechselrichter. Jedem Elektrodensegment der ersten Flächenelektrode sowie der zweiten Flächenelektrode ist also jeweils ein eigener Wechselrichter zugeordnet. Die Potentiale der Wechselrichter werden mit einer veränderlichen Funktion moduliert, beispielsweise einer Sinusfunktion, wobei die Potentiale der Wechselrichter der Elektrodensegmente der ersten Flächenelektrode in Phase sind und das Potential des Wechselrichters der zweiten Flächenelektrode dazu phasenverschoben ist, insbesondere mit einer Phasenverschiebung von 180°. Das Signal für die zweite Flächenelektrode ist dann gegenüber demjenigen der ersten Flächenelektrode invertiert. So wird eine zeitlich veränderliche, periodische Potentialdifferenz erzeugt, mit abwechselnd relativ positiven und relativ negativen Beiträgen, was einer Wechselspannung entspricht.

Da die Bordspannung von Fahrzeugen (beispielsweise 12 bis 14 V) typischerweise nicht ausreichend ist, um das Funktionselement vollständig zu schalten, ist die Steuereinheit darüber hinaus bevorzugt mit einem Gleichspannungswandler ausgestattet, der geeignet ist, die bereitgestellte Speisespannung (Primärspannung) zu erhöhen, das heißt in eine höhere Sekundärspannung zu wandeln (beispielsweise 65 V). Die Anwendung eines Gleichspannungswandler ist nicht auf die Situation in Fahrzeugen beschränkt, sondern kann auch in anderen Fällen erforderlich oder vorteilhaft sein. Die Steuereinheit ist an die Gleichspannungsquelle angeschlossen und wird von dieser mit einer Primärspannung versorgt. Die Primärspannung wird durch den Gleichspannungswandler in die höhere Sekundärspannung gewandelt. Die Sekundärspannung wird durch den Wechselrichter in eine Wechselspannung gewandelt (beispielsweise 48 V), wozu dieser geeignet ist. Die Wechselspannung wird dann einerseits an die Elektrodensegmente der ersten Flächenelektrode und andererseits an die zweite Flächenelektrode angelegt.

Die Sekundärspannung beträgt in einer vorteilhaften Ausgestaltung von 5 V bis 70 V, die Wechselspannung von 5 V bis 50 V.

In einer vorteilhaften Weiterbildung der erfindungsgemäßen Verglasungseinheit wird die Temperatur der Verbundscheibe bestimmt.

In einer vorteilhaften Weiterbildung des erfindungsgemäßen Verfahrens wird die Temperatur T des PDLC-Funktionselements bestimmt und die Schritte A-D des erfindungsgemäßen Verfahrens nur durchgeführt, wenn die Temperatur T größer 50°C, bevorzugt größer 60°C beträgt.

In einer alternativen oder kombinierten Weiterbildung des erfindungsgemäßen Verfahrens wird die Temperatur T des PDLC-Funktionselements bestimmt und die Schritte A-D werden nur durchgeführt, wenn nach dem letzten Anlegen des Schaltzustands "on" am PDLC-Funktionselement ein Temperaturprofil durchlaufen wurde, bei dem die Temperatur T zu irgendeinem Zeitpunkt größer 40°C, bevorzugt größer 50°C und besonders bevorzugt größer 60°C betrug.

Alternativ oder in Kombination kann um die anzulegende Spannung oder die jeweilige Zeitdauer t des "on"-Schaltzustands an die ermittelte Temperatur angepasst werden.

Dabei wird davon ausgegangen, dass die Verbundscheibe insgesamt eine homogene Temperatur aufweist, also die Temperatur des Funktionselements mit der Temperatur anderer Bereiche der Verbundscheibe übereinstimmt, was typischerweise zumindest näherungsweise der Fall ist. Die Bestimmung der Temperatur der Verbundscheibe entspricht demnach zumindest näherungsweise der Bestimmung der Temperatur des Funktionselements.

In einer vorteilhaften Ausgestaltung ist die Verbundscheibe mit einem Temperatursensor ausgestattet. Der Temperatursensor ist derart mit der Steuereinheit verbunden, dass die Steuereinheit die Temperatur der Verbundscheibe mittels des Temperatursensors ermitteln kann. Das Messsignal des Temperatursensors wird also an die Steuereinheit übermittelt und dort ausgewertet, so dass die Steuereinheit die Temperatur der Verbundscheibe mittels des Temperatursensors bestimmt. Der Temperatursensor kann in der Verbundscheibe integriert sein, indem er in die Zwischenschicht eingelagert wird. Alternativ kann der Temperatursensor äußerlich an der Verbundscheibe befestigt oder dieser zugeordnet sein. Bevorzugt ist der Temperatursensor dabei an der innenraumseitigen Oberfläche der Innenscheibe befestigt. Der Temperatursensor kann auch in der Steuereinheit selbst angeordnet sein oder in einem Befestigungselement, mit dem die Steuereinheit an der Verbundscheibe befestigt ist. Grundsätzlich kann auch ein Temperatursensor verwendet werden, der nicht direkt an der Verbundscheibe befestigt oder in diese integriert ist, sondern die Temperatur auf Distanz misst, beispielsweise ein IR-Sensor, der in der Umgebung der Verbundscheibe angeordnet und auf diese gerichtet ist.

In einer weiteren vorteilhaften Ausgestaltung ist die Steuereinheit geeignet, die elektrische Impedanz der aktiven Schicht zu bestimmen und daraus die Temperatur der Verbundscheibe, genauer gesagt des Funktionselements zu bestimmen. Dies ist möglich, da die Impedanz (das Äquivalent des klassischen Ohmschen Widerstands bei Wechselspannungen) temperaturabhängig ist. Insbesondere besteht zwischen dem Realteil der elektrischen Impedanz und der Temperatur des Funktionselementes ein injektiver Zusammenhang. Auf diese Weise kann jeder Impedanz eine Temperatur zugeordnet werden. Insbesondere ist der Realteil der Impedanz als Funktion der Temperatur streng monoton fallend. Die Ausgestaltung hat den Vorteil, dass auf einen Temperatursensor verzichtet werden kann, der als weiteres Bauteil integriert werden muss und daher den Aufbau verkompliziert und die Herstellungskosten erhöht.

Typischerweise ist der Memory-Effekt und die Temperaturabhängigkeit des Schaltverhaltens oberhalb einer bestimmten Grenztemperatur stark ausgeprägt, während die temperaturabhängige Änderung unterhalb der Grenztemperatur gering ausgeprägt ist. Die Grenztemperatur liegt bei gebräuchlichen Funktionselementen typischerweise bei etwa 60°C. Höhere Temperaturen treten insbesondere bei starker Sonneneinstrahlung auf. Es ist daher in einer Weiterbildung der Erfindung möglich, dass das Verfahren derart ausgeführt wird, dass die Temperatur bestimmt wird, und das erfindungsgemäße Verfahren nur ausgeführt wird, nachdem eine Temperatur größer als eine vorher festgelegte Grenztemperatur erreicht wurde (beispielsweise 50°C oder 60°C).

Das erfindungsgemäße Funktionselement ist ein PDLC-Funktionselement (*polymerdispersed liquid crystal*). Die aktive Schicht eines PDLC-Funktionselements enthält Flüssigkristalle, welche in eine Polymermatrix eingelagert sind.

Das erfindungsgemäße Funktionselement ist bevorzugt ein Standard-PDLC-Funktionselement, welches im "on"-Schaltzustand bei angelegter Spannung eine maximale Transmission und minimale Trübung (klarer, transparenter Zustand) und im "off"-Schaltzustand bei abgeschalteter Spannung eine minimale Transmission mit maximaler Trübung (trüber, nicht-transparenter (diffuser) Zustand) aufweist. D.h. wird an die Flächenelektroden keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht. Es können aber auch andere Funktionselemente verwendet werden, deren Veränderlichkeit der optischen Eigenschaften auf Flüssigkristallen basiert, beispielsweise PNLC-Funktionselemente (*polymer networked liquid crystal*).

Alternativ ist das erfindungsgemäße Funktionselement bevorzugt ein Reverse-PDLC-Funktionselement (auch reverse mode PDLC genannt), welches im "off"-Schaltzustand bei abgeschalteter Spannung eine maximale Transmission und minimale Trübung (klarer, transparenter Zustand) und im "on"-Schaltzustand bei angelegter Spannung eine minimale Transmission mit maximaler Trübung (trüber, nicht-transparenter (diffuser) Zustand) aufweist. Die erfindungsgemäße Lehre gilt hier entsprechend.

Die erwähnten regelbaren PDLC-Funktionselemente und deren Funktionsweise sind dem Fachmann an sich bekannt, so dass an dieser Stelle auf eine ausführliche Beschreibung verzichtet werden kann.

In einer vorteilhaften Ausgestaltung umfasst das PDLC-Funktionselement außer der aktiven Schicht und den Flächenelektroden zwei Trägerfolien, wobei die aktive Schicht und die Flächenelektroden bevorzugt zwischen den Trägerfolien angeordnet sind. Die Trägerfolien sind bevorzugt aus thermoplastischem Material ausgebildet, beispielsweise auf Basis von Polyethylenterephthalat (PET), Polypropylen, Polyvinylchlorid, fluorinierte Ethylen-Propylene, Polyvinylfluorid oder Ethylen-Tetrafluorethylen, besonders bevorzugt auf Basis von PET. Die Dicke der Trägerfolien beträgt bevorzugt von 10 µm bis 200 µm. Solche Funktionselemente können vorteilhaft als Mehrschichtfolien bereitgestellt werden, insbesondere käuflich erworben werden, in der gewünschten Größe und Form zurechtgeschnitten werden und dann in die Verbundscheibe einlaminiert werden, bevorzugt über jeweils eine thermoplastische Verbindungsschicht mit der Außenscheibe und der Innenscheibe. Es ist möglich, die erste Flächenelektrode durch Laserstrahlung zu segmentieren, auch wenn sie in einer solche Mehrschichtfolie eingelagert ist. Durch die Laserbearbeitung kann eine dünne, optisch unauffällige Isolierungslinie erzeugt werden, ohne die typischerweise darüber liegende Trägerfolie zu beschädigen.

Die Seitenkante des Funktionselements kann versiegelt werden, beispielsweise durch Verschmelzen der Trägerschichten oder durch ein (bevorzugt polymeres) Band. So kann die aktive Schicht geschützt werden, insbesondere davor, dass Bestandteile der Zwischenschicht (insbesondere Weichmacher) in die aktive Schicht hineindiffundieren, was zu einer Degradation des Funktionselements führen kann.

Zur elektrischen Kontaktierung der Flächenelektroden beziehungsweise Elektrodensegmente sind diese bevorzugt mit sogenannten Flach- oder Folienleitern verbunden, welche sich aus der Zwischenschicht über die Seitenkante der Verbundscheibe hinaus erstrecken. Flachleiter weisen als leitfähigen Kern eine bandartige metallische Schicht auf, welche typischerweise mit Ausnahme der Kontaktflächen von einer polymeren Isolationsummantelung umgeben ist. Optional können sogenannte Sammelleiter (*bus bars*), beispielsweise Streifen einer elektrisch leitfähigen Folie (beispielsweise Kupferfolie) oder elektrisch leitfähige Aufdrucke, auf den Flächenelektroden angeordnet sein, wobei die Flach- oder Folienleiter mit diesen Sammelleitern verbunden sind. Die Flach- oder Folienleiter sind direkt oder über weitere Leiter an die Steuereinheit angeschlossen.

Die Steuereinheit ist in einer vorteilhaften Ausgestaltung an der innenraumseitigen, von der Zwischenschicht abgewandten Oberfläche der Innenscheibe befestigt. Die Steuereinheit kann beispielsweise direkt an die Oberfläche der Innenscheibe angeklebt sein. In einer vorteilhaften Ausgestaltung ist die Steuereinheit in ein Befestigungselement eingesetzt, welches wiederum an der innenraumseitigen Oberfläche der Innenscheibe befestigt ist, bevorzugt über eine Schicht eines Klebstoffs. Solche Befestigungselemente sind im Fahrzeugbereich auch als "Brackets" bekannt und typischerweise aus Kunststoff gefertigt. Durch die Anbringung der Steuereinheit direkt an der Verbundscheibe wird der elektrische Anschluss derselben erleichtert. Insbesondere sind keine langen Kabel zwischen Steuereinheit und Funktionselement erforderlich.

Alternativ ist es aber auch möglich, dass die Steuereinheit nicht an der Verbundscheibe befestigt ist, sondern beispielsweise im elektrischen System des Fahrzeugs integriert ist oder an der Fahrzeugkarosserie befestigt ist, falls die Verbundscheibe eine Fahrzeugscheibe ist. Die Steuereinheit ist bevorzugt im Innenraum des Fahrzeugs derart angeordnet, dass sie nicht sichtbar ist, beispielsweise im Armaturenbrett oder hinter einer Wandverkleidung.

Der Verbundscheibe kann mit einem opaken Abdeckdruck ausgestattet sein, insbesondere in einem umlaufenden Randbereich, wie es im Fahrzeugbereich insbesondere für Windschutzscheiben, Heckscheiben und Dachscheiben üblich ist. Der Abdeckdruck ist typischerweise aus einer Emaille gebildet, enthaltend Glasfritten und ein Pigment, insbesondere Schwarzpigment. Die Druckfarbe wird typischerweise im Siebdruckverfahren aufgebracht und eingebrannt. Ein solcher Abdeckdruck ist auf mindestens einer der Scheibenoberflächen aufgebracht, bevorzugt der innenraumseitigen Oberfläche der Außenscheibe und/oder der Innenscheibe. Der Abdeckdruck umgibt bevorzugt einen zentralen Durchsichtsbereich rahmenartig und dient insbesondere dem Schutz des Klebstoffs, durch den die Verbundscheibe mit der Fahrzeugkarosserie verbunden ist, vor UV-Strahlung. Ist die Steuereinheit an der innenraumseitigen Oberfläche der Innenscheibe angebracht, dann bevorzugt im opaken Bereich des Abdeckdrucks.

Die thermoplastische Zwischenschicht dient der Verbindung der beiden Scheiben, wie es bei Verbundscheiben üblich ist. Typischerweise werden thermoplastische Folien verwendet und die Zwischenschicht aus diesen ausgebildet. In einer bevorzugten Ausgestaltung ist die Zwischenschicht zumindest aus einer ersten thermoplastischen Schicht und einer zweiten thermoplastischen Schicht gebildet, zwischen denen das Funktionselement angeordnet ist. Das Funktionselement ist dann über einen Bereich der ersten thermoplastischen Schicht mit der Außenscheibe und über einen Bereich der zweiten thermoplastischen Schicht mit der Innenscheibe verbunden. Bevorzugt ragen die thermoplastischen Schichten umlaufend über das Funktionselement hinaus. Dort wo die thermoplastischen Schichten direkten Kontakt miteinander haben und nicht durch das Funktionselement voneinander getrennt sind, können sie beim Laminieren derart verschmelzen, dass die ursprünglichen Schichten unter Umständen nicht mehr erkennbar sind und stattdessen eine homogene Zwischenschicht vorliegt.

Eine thermoplastische Schicht kann beispielsweise durch eine einzige thermoplastische Folie ausgebildet werden. Eine thermoplastische Schicht kann auch aus Abschnitten unterschiedlicher thermoplastischer Folien gebildet werden, deren Seitenkanten aneinandergesetzt sind.

In einer bevorzugten Ausgestaltung ist das Funktionselement, genauer die Seitenkanten des Funktionselements umlaufend von einer dritten thermoplastischen Schicht umgeben. Die dritte thermoplastische Schicht ist rahmenartig ausgebildet mit einer Aussparung, in welche das Funktionselement eingelegt wird. Die dritte thermoplastische Schicht kann durch eine thermoplastische Folie gebildet werden, in welche die Aussparung durch Ausschneiden eingebracht worden ist. Alternativ kann die dritte thermoplastische Schicht auch aus mehreren Folienabschnitten um das Funktionselement zusammengesetzt werden. Die Zwischenschicht ist dann aus insgesamt mindestens drei flächig aufeinander angeordneten thermoplastischen Schichten gebildet, wobei die mittlere Schicht eine Aussparung ausweist, in der das Funktionselement angeordnet ist. Bei der Herstellung wird die dritte thermoplastische Schicht zwischen der ersten und der zweiten thermoplastischen Schicht angeordnet, wobei die Seitenkanten aller thermoplastischen Schichten bevorzugt in Deckung befindlich sind. Die dritte thermoplastische Schicht weist bevorzugt etwa die gleiche Dicke auf wie das Funktionselement. Dadurch wird der lokale Dickenunterschied, der durch das örtlich begrenzte Funktionselement eingebracht wird, kompensiert, so dass Glasbruch beim Laminieren vermieden werden kann und ein verbessertes optisches Erscheinungsbild entsteht.

Die Schichten der Zwischenschicht sind bevorzugt aus demselben Material ausgebildet, können prinzipiell aber auch aus unterschiedlichen Materialien ausgebildet sein. Die Schichten beziehungsweise Folien der Zwischenschicht sind bevorzugt auf Basis von Polyvinylbutyral (PVB), Ethylenvinylacetat (EVA), oder Polyurethan (PU). Das bedeutet, dass die Schicht beziehungsweise Folie mehrheitlich das besagte Material enthält (Anteil von größer als 50 Gew.-%) und daneben optional weitere Bestandteile enthalten kann, beispielsweise Weichmacher, Stabilisatoren, UV- oder IR-Absorber. Die Dicke jeder thermoplastischen Schicht beträgt bevorzugt von 0,2 mm bis 2 mm, besonders bevorzugt von 0,3 mm bis 1 mm. Beispielsweise können Folien mit den Standarddicken von 0,38 mm oder 0,76 mm verwendet werden.

Die Außenscheibe und die Innenscheibe sind bevorzugt aus Glas gefertigt sind, besonders bevorzugt aus Kalk-Natron-Glas, wie es für Fensterscheiben üblich ist. Die Scheiben können aber auch aus anderen Glassorten gefertigt sein, beispielsweise Quarzglas, Borosilikatglas oder Aluminosilikatglas, oder aus starren klaren Kunststoffen, beispielsweise Polycarbonat oder Polymethylmethacrylat. Die Scheiben können klar sein oder auch getönt oder gefärbt. Je nach Anwendungsfall können dem Grad der Tönung oder Färbung Grenzen gesetzt sein: so muss mitunter eine vorgeschriebene Lichttransmission gewährleistet sein, beispielsweise eine Lichttransmission von mindestens 70 % im Haupt-Durchsichtbereich A gemäß der Regelung Nr. 43 der Wirtschaftskommission der Vereinten Nationen für Europa (UN/ECE) (ECE-R43, "Einheitliche Bedingungen für die Genehmigung der Sicherheitsverglasungswerkstoffe und ihres Einbaus in Fahrzeuge").

Die Außenscheibe, die Innenscheibe und/oder die Zwischenschicht können geeignete, an sich bekannte Beschichtungen aufweisen, beispielsweise Antireflexbeschichtungen, Antihaftbeschichtungen, Antikratzbeschichtungen, photokatalytische Beschichtungen, UVabsorbierende oder reflektierende Beschichtungen oder IR-absorbierende oder - reflektierende Beschichtungen wie Sonnenschutzbeschichtungen oder Low-E-Beschichtungen.

Die Dicke der Außenscheibe und der Innenscheibe kann breit variieren und so den Erfordernissen im Einzelfall angepasst werden. Die Außenscheibe und die Innenscheibe weisen bevorzugt Dicken von 0,5 mm bis 5 mm auf, besonders bevorzugt von 1 mm bis 3 mm.

Die Erfindung umfasst außerdem die Verwendung einer erfindungsgemäßen Verglasungseinheit, insbesondere der Verbundscheibe einer erfindungsgemäßen Verglasungseinheit, in Gebäuden oder in Fortbewegungsmitteln für den Verkehr auf dem Lande, in der Luft oder zu Wasser, bevorzugt als Fensterscheibe eines Fahrzeugs, insbesondere eines Kraftfahrzeugs. Die Verglasungseinheit kann beispielweise verwendet werden als Windschutzscheibe, Dachscheibe, Rückwandscheibe oder Seitenscheibe.

In einer besonders bevorzugten Ausgestaltung ist die Verglasungseinheit beziehungsweise die Verbundscheibe eine Windschutzscheibe eines Fahrzeugs. Das Funktionselement wird dabei bevorzugt als elektrisch steuerbare Sonnenblende eingesetzt, welche in einem oberen Bereich der Windschutzscheibe angeordnet ist, während der Großteil der Windschutzscheibe nicht mit dem Funktionselement versehen ist. Die Schaltbereiche sind bevorzugt im Wesentlichen parallel zur Oberkante der Windschutzscheibe mit wachsendem Abstand zu dieser angeordnet. Durch die unabhängig schaltbaren Schaltbereiche kann der Benutzer in Abhängigkeit vom Sonnenstand das Ausmaß des an die Oberkante grenzenden Bereichs bestimmen, der abgedunkelt oder mit einer hohen Lichtstreuung versehen werden soll, um eine Blendwirkung durch die Sonne zu vermeiden.

In einer weiteren bevorzugten Ausgestaltung ist die Verglasungseinheit beziehungsweise die Verbundscheibe eine Dachscheibe eines Fahrzeugs. Das Funktionselement ist dabei bevorzugt im gesamten Durchsichtbereich der Verbundscheibe angeordnet. In einer typischen Ausgestaltung umfasst dieser Durchsichtbereich die gesamte Verbundscheibe abzüglich eines umlaufenden Randbereichs, der mit einem opaken Abdeckdruck auf mindestens einer der Oberfläche der Scheiben versehen ist. Das Funktionselement erstreckt sich über den gesamten Durchsichtbereich, wobei seine Seitenkanten im Bereich des opaken Abdeckdrucks angeordnet und dadurch für den Betrachter nicht sichtbar sind. Die Schaltbereiche sind bevorzugt im Wesentlichen parallel zur Vorderkante der Dachscheibe mit wachsendem Abstand zu dieser angeordnet. Durch die unabhängig schaltbaren Schaltbereiche kann der Benutzer festlegen, welche Bereich der Dachscheibe transparent sein sollen und welche abgedunkelt oder mit einer hohen Lichtstreuung versehen werden sollen, beispielsweise in Abhängigkeit vom Sonnenstand, um eine übermäßige Erwärmung des Fahrzeuginnenraums zu vermeiden. Es ist auch möglich, dass jedem Fahrzeuginsassen, also beispielsweise dem Fahrer, dem Beifahrer, dem linken und dem rechten hinteren Insassen, jeweils ein über ihm befindlicher Schaltbereich zugeordnet ist.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:
- Fig. 1: eine Draufsicht auf eine Ausgestaltung der erfindungsgemäßen Verglasungseinheit,
- Fig. 2: einen Querschnitt durch die Verglasungseinheit aus Figur 1,
- Fig. 3: eine vergrößerte Darstellung des Bereichs Z aus Figur 2,
- Fig. 4: das PDLC-Funktionselement der Verglasungseinheit aus Figur 1 in einem Ersatzschaltbild,
- Fig. 5a),b): schematische Darstellung des Schaltverhaltens des PDLC-Funktionselements bei einem Verfahren nach dem Stand der Technik,
- Fig. 6a)-c): schematische Darstellung des Schaltverhaltens des PDLC-Funktionselements bei dem erfindungsgemäßen Verfahren,
- Fig. 7a)-c): schematische Darstellung eines typischen Anwendungsbeispiels und
- Fig. 8a),b): schematische Darstellung eines weiteren typischen Anwendungsbeispiels.

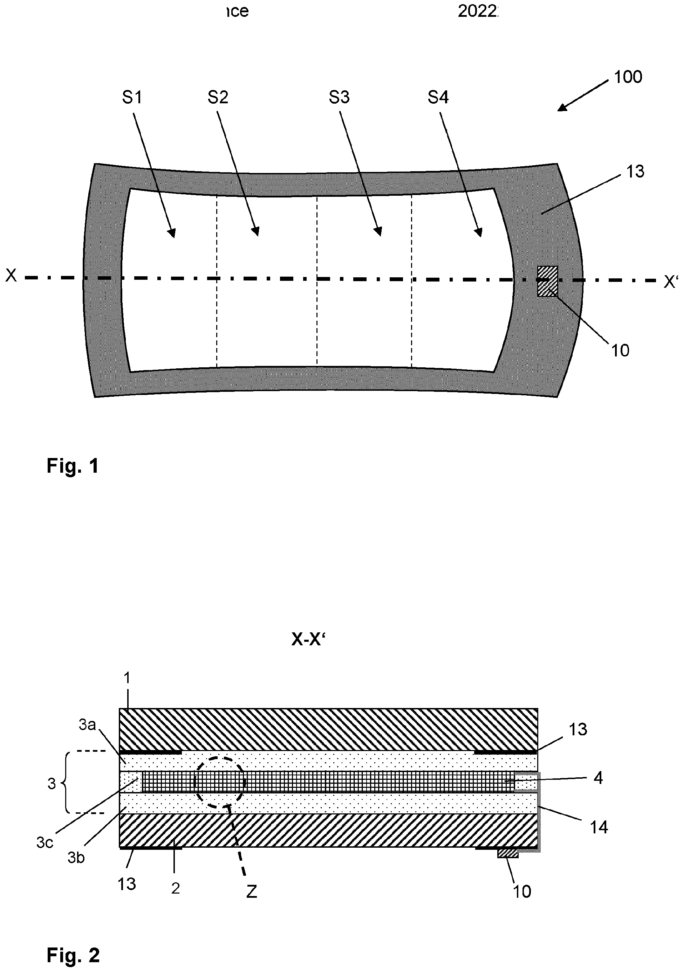

Figur 1, Figur 2, Figur 3 und Figur 4 zeigen je ein Detail einer erfindungsgemäßen Verglasungseinheit 100 mit einem PDLC-Funktionselement 4, welches elektrisch steuerbare optische Eigenschaften aufweist. Die Verglasungseinheit 100 umfasst eine Verbundscheibe, die beispielhaft als Dachscheibe eines Personenkraftwagens vorgesehen ist, deren optische Eigenschaften wie Lichttransmission oder Lichtstreuung bereichsweise elektrisch gesteuert werden kann. Die Verbundscheibe umfasst eine Außenscheibe 1 und eine Innenscheibe 2, die über eine Zwischenschicht 3 miteinander verbunden sind. Die Außenscheibe 1 und die Innenscheibe 2 bestehen beispielsweise aus Kalk-Natron-Glas, welches optional getönt sein kann. Die Außenscheibe 1 weist beispielsweise eine Dicke von 2,1 mm auf, die Innenscheibe 2 eine Dicke von 1,6 mm.

Die Zwischenschicht 3 umfasst beispielsweise insgesamt drei thermoplastischen Schichten 3a, 3b, 3c, die jeweils durch eine thermoplastische Folie mit einer Dicke von 0,38 mm aus PVB ausgebildet sind. Die erste thermoplastische Schicht 3a ist mit der Außenscheibe 1 verbunden, die zweite thermoplastische Schicht 3b mit der Innenscheibe 2. Die dazwischenliegende dritte thermoplastische Schicht 3c weist einen Ausschnitt auf, in welchen ein PDLC-Funktionselement 4 im Wesentlichen passgenau, das heißt an allen Seiten etwa bündig, eingelegt ist. Die dritte thermoplastische Schicht 3c bildet also gleichsam eine Art Passepartout oder Rahmen für das etwa 0,4 mm dicke Funktionselement 4, welches somit rundum in thermoplastisches Material eingekapselt und dadurch geschützt ist. Das PDLC-Funktionselement 4 ist beispielsweise eine PDLC-Mehrschichtfolie, die von einem klaren, transparenten Zustand in einen trüben, nicht-transparenten (diffusen) Zustand geschaltet werden kann.

Die PDLC-Mehrschichtfolie ist hier beispielsweise eine Standard-PDLC-Mehrschichtfolie, die im "on"-Schaltzustand bei angelegter Spannung eine maximale Transmission und minimale Trübung (klarer, transparenter Zustand) und im "off"-Schaltzustand bei abgeschalteter Spannung eine minimale Transmission mit maximaler Trübung (trüber, nicht-transparenter (diffuser) Zustand) aufweist.

Das PDLC-Funktionselement 4 ist eine Mehrschichtfolie, bestehend aus einer aktiven Schicht 5 zwischen zwei Flächenelektroden 8, 9 und zwei Trägerfolien 6, 7. Die aktive Schicht 5 enthält eine Polymermatrix mit darin dispergierten Flüssigkristallen, die sich in Abhängigkeit der an die Flächenelektroden 8, 9 angelegten elektrischen Spannung ausrichten, wodurch die optischen Eigenschaften geregelt werden können. Die Trägerfolien 6, 7 bestehen aus PET und weisen eine Dicke von beispielsweise 0,125 mm auf. Die Trägerfolien 6, 7 sind mit einer zur aktiven Schicht 5 weisenden Beschichtung aus ITO mit einer Dicke von etwa 100 nm versehen, welche die Flächenelektroden 8, 9 ausbilden. Die Flächenelektroden 8, 9 sind über nicht dargestellte Sammelleiter (beispielweise ausgebildet aus Streifen einer Kupferfolie) mit elektrischen Kabeln 14 verbunden, welche die elektrische Verbindung zu einer Steuereinheit 10 herstellen.

Diese Steuereinheit 10 ist beispielhaft an der innenraumseitigen, von der Zwischenschicht 3 abgewandten Oberfläche der Innenscheibe 2 angebracht. Dazu ist beispielsweise ein nicht dargestelltes Befestigungselement an die Innenscheibe 2 angeklebt, in welches die Steuereinheit 10 eingesetzt ist. Die Steuereinheit 10 muss aber nicht zwingend direkt an der Verbundscheibe angebracht sein. Sie kann alternativ beispielsweise am Armaturenbrett oder der Fahrzeugkarosserie angebracht sein oder in die Bordelektrik des Fahrzeugs integriert sein.

Die Verbundscheibe weist einen umlaufenden Randbereich auf, welche mit einem opaken Abdeckdruck 13 versehen ist. Diese Abdeckdruck 13 ist typischerweise aus einer schwarzen Emaille ausgebildet. Sie wird als Druckfarbe mit einem Schwarzpigment und Glasfritten im Siebdruckverfahren aufgedruckt und in die Scheibenoberfläche eingebrannt. Der Abdeckdruck 13 ist beispielhaft auf der innenraumseitigen Oberfläche der Außenscheibe 1 und auch auf der innenraumseitigen Oberfläche der Innenscheibe 2 aufgebracht. Die Seitenkanten des Funktionselements 4 sind durch diesen Abdeckdruck 13 verdeckt. Die Steuereinheit 10 ist in diesem opaken Randbereich angeordnet, also auf den Abdeckdruck 13 der Innenscheibe 2 aufgeklebt. Dort stört die Steuereinheit 10 die Durchsicht durch die Verbundscheibe nicht und ist optisch unauffällig. Zudem weist sie einen geringen Abstand zur Seitenkante der Verbundscheibe auf, so dass nur vorteilhaft kurze Kabel 14 zum elektrischen Anschluss des Funktionselements 14 nötig sind.

Die Steuereinheit 10 ist andererseits mit der Bordelektrik des Fahrzeugs verbunden, was in den Figuren 1 und 2 der Einfachheit halber nicht dargestellt ist. Die Steuereinheit 10 ist geeignet, in Abhängigkeit von einem Schaltsignal, welches der Fahrer beispielsweise mit einem Knopfdruck vorgibt, die Spannung an die Flächenelektroden 8, 9 des PDLC-Funktionselements 4 anzulegen, welche für den gewünschten optischen Zustand des PDLC-Funktionselements 4 (Schaltzustand "on"/"off") erforderlich ist.

Der Verbundscheibe weist beispielhaft vier unabhängige Schaltbereiche S1, S2, S3, S4 auf, in denen der Schaltzustand des PDLC-Funktionselements 4 unabhängig voneinander durch die Steuereinheit 10 eingestellt werden kann. Die Schaltbereiche S1, S2, S3, S4 sind in der Richtung von der Vorderkante zur Hinterkante der Dachscheibe hintereinander angeordnet, wobei die Begriffe Vorderkante und Hinterkante auf die Fahrtrichtung des Fahrzeugs bezogen sind. Durch die Schaltbereiche S1, S2, S3, S4 kann der Fahrer des Fahrzeugs (beispielsweise in Abhängigkeit vom Sonnenstand) wählen, statt der gesamten Verbundscheibe nur einen Bereich derselben mit dem diffusen Zustand zu versehen, während die anderen Bereiche transparent bleiben.

Um die Schaltbereiche S1, S2, S3, S4 auszubilden, ist die erste Flächenelektrode 8 durch drei Isolierungslinien 8' unterbrochen, welche im Wesentlichen parallel zueinander angeordnet sind und sich von einer Seitenkante zur gegenüberliegenden Seitenkante des Funktionselements 4 erstrecken. Die Isolierungslinien 8' sind typischerweise durch Laserbearbeitung in die erste Flächenelektrode 8 eingebracht und teilt diese in vier stofflich voneinander getrennte Elektrodensegmente 8.1, 8.2, 8.3 und 8.4 auf. Jedes Elektrodensegment 8.1, 8.2, 8.3 und 8.4 ist unabhängig von den anderen mit der Steuereinheit 10 verbunden. Die Steuereinheit ist geeignet, unabhängig voneinander eine elektrische Spannung zwischen jedem Elektrodensegment 8.1, 8.2, 8.3 und 8.4 der ersten Flächenelektrode 8 einerseits und der zweiten Flächenelektrode 9 andererseits anzulegen, so dass der dazwischen befindliche Abschnitt der aktiven Schicht 5 mit der erforderlichen Spannung beaufschlagt wird, um einen gewünschten Schaltzustand zu erreichen.

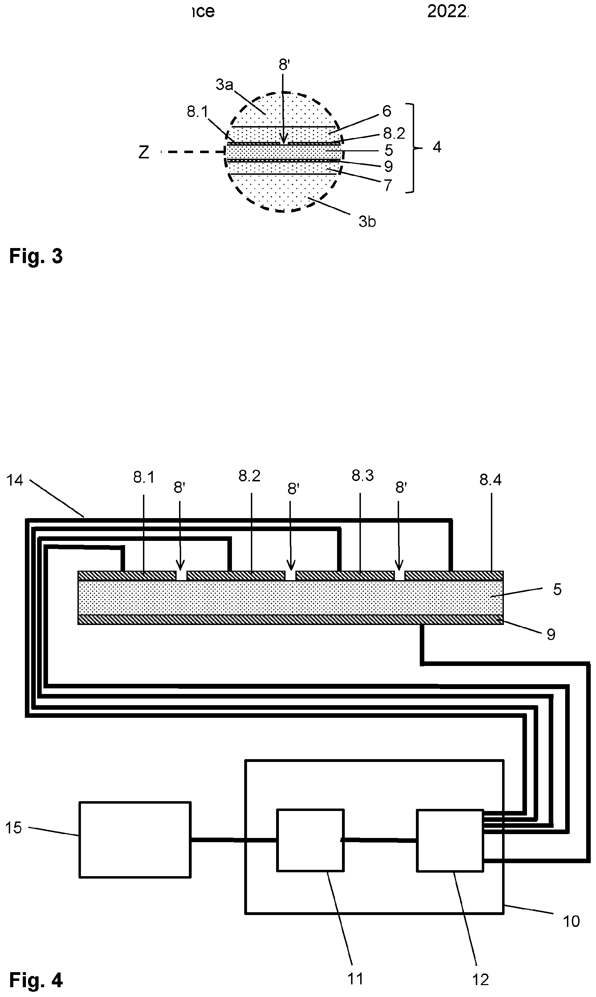

Wie im Ersatzschaltbild der Figur 4 veranschaulicht, ist die Steuereinheit 10 über die Bordelektrik des Fahrzeugs an eine Spannungsquelle 15 angeschlossen. Die Spannungsquelle 15 stellt im Fahrzeugbereich typischerweise eine Gleichspannung im Bereich von 12 V bis 14 V bereit (Bordspannung des Fahrzeugs). Die Steuereinheit 10 ist beispielsweise mit einem Gleichspannungswandler 11 ausgestattet, welcher die Bordspannung (Primärspannung) in eine Gleichspannung mit höherem Betrag wandelt, beispielsweise 65 V (Sekundärspannung). Die Sekundärspannung muss ausreichend hoch sein, um einen Schaltzustand des PDLC-Funktionselements 4 von 100% zu realisieren. Die Steuereinheit 10 ist darüber hinaus mit einem Wechselrichter 12 ausgestattet, der die Sekundärspannung in eine Wechselspannung wandelt. Ein Pol des Wechselrichters 12 ist mit der zweiten Flächenelektrode 9 verbunden. Für den anderen Pol weist der Wechselrichter 12 mehrere unabhängige Ausgänge auf, wobei jedes welche jeweils mit einem Elektrodensegment 8.1, 8.2, 8.3 und 8.4 mit einem der unabhängigen Ausgänge verbunden ist, so dass der Schaltzustand des zugehörigen Schaltbereichs S1, S2, S3, S4 unabhängig von den anderen eingestellt werden kann.

Bei einem Schaltzustand von 0% ("off") weisen die Elektrodensegmente 8.1, 8.2, 8.3, 8.4 und die zweite Flächenelektrode 9 stets das gleiche elektrische Potential auf, so dass keine Spannung anliegt. Bei einem Schaltzustand größer 0% ("on") eines Schaltbereichs S1, S2, S3, S4 liegt eine Spannung zwischen dem zugehörigen Elektrodensegment 8.1, 8.2, 8.3, 8.4 und der zweiten Flächenelektrode 9 an. Infolge der Spannung fließt ein Strom durch den zugehörigen Abschnitt der aktiven Schicht 5.

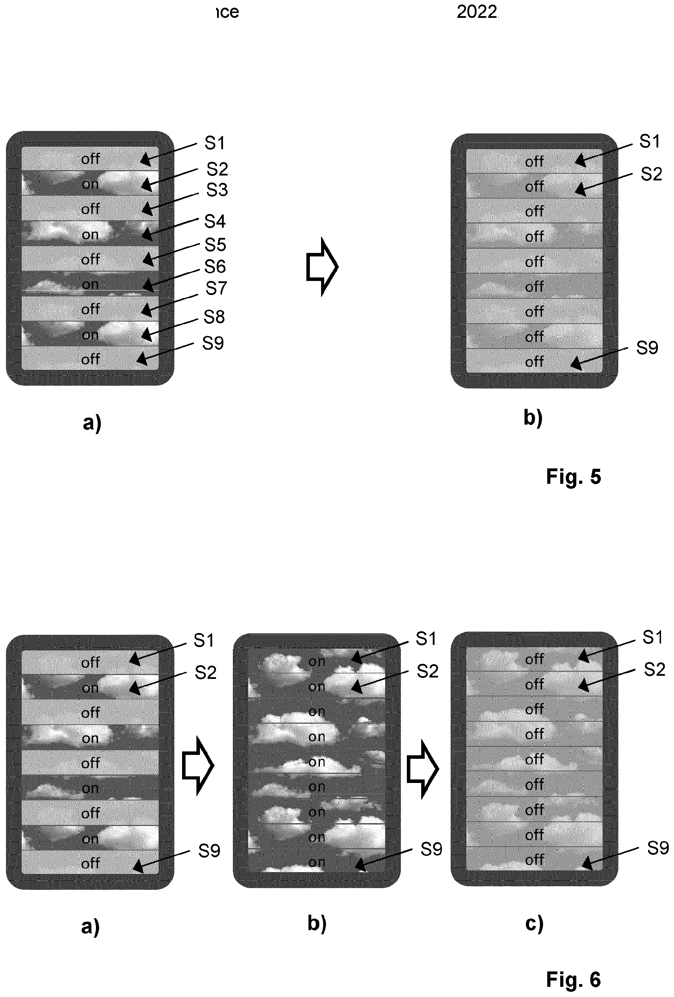

Die Figuren 5 a) und b) zeigen eine schematische Darstellung des Schaltverhaltens des PDLC-Funktionselements 4 bei einem Verfahren nach dem Stand der Technik. Die Verglasungseinheit 100 weist in diesem Vergleichsbeispiel nach dem Stand der Technik neun benachbarte und unabhängig schaltbare Schaltbereiche (S1-S9) auf, die mit einer hier nicht dargestellten Steuereinheit 10 verbunden sind (beispielsweise dem Prinzip nach den Figuren 1-4 folgend).

Figur 5 a) zeigt dabei einen alternierenden Schaltzustand, d.h. jeweils benachbarte Schaltbereiche (Elektrodensegmente) weisen unterschiedliche Schaltzustände auf. So sind hier beispielsweise die Schaltbereiche S1, S3, S5, S7 und S9 mit dem Schaltzustand "off" beschaltet, was beispielsweise einer maximal Diffusität (Trübung oder Streuung) in der Durchsicht durch das PDLC-Funktionselement 4 im jeweiligen Schaltbereich S1, S3, S5, S7 und S9 entspricht. Die jeweils unmittelbar benachbarten und nur durch eine Isolationslinie 8' zwischen den Elektrodensegmenten 8.1-8.9 (hier nicht im Detail dargestellt) voneinander getrennten Schaltbereiche S2, S4, S6 und S8 sind mit dem Schaltzustand "on" beschaltet, was beispielsweise einer minimalen diffusen Durchsicht (also einer maximalen Klarheit) entspricht.

Figur 5 b): Werden nun alle Schaltbereiche S1-S9 durch Veränderung des Schaltzustands "on" der Schaltbereiche S2, S4, S6 und S8 unmittelbar in den Schaltzustand "off" geschaltet, so fällt auf, dass die Schaltbereiche S2, S4, S6 und S8, die ihren Schaltzustand von "on" nach "off" geändert haben, eine geringere Diffusität erlangen als die Schaltbereiche S1, S3, S5, S7 und S9, die bereits für eine gewisse Zeit im Schaltzustand "off" waren und somit eine andere Schalthistorie und eine abweichende Temperaturhistorie aufweisen können. Dieser Effekt kann als der eingangs beschriebene Memory-Effekt bezeichnet werden und nimmt in seiner Ausprägung mit zunehmender Temperatur des PDLC-Funktionselements 4 zu. Der resultierende Unterschied ist wenig ästhetisch und kann beispielsweise in einer Fahrzeugverglasung zu Blendeffekten für den Fahrer oder weitere Insassen führen.

Die erfinderische Lehre kann mit anderen Worten folgendermaßen beschrieben werden: Wenn die Schaltbereiches des PDLC-Funktionselements 4 beispielsweise im Schaltzustand "off" ausgehend von Raumtemperatur auf eine Temperatur von beispielsweise 60°C erwärmt und anschließend wieder abgekühlt werden, dann unterscheidet sich danach die Transparenz des "neuen" "off"-Schaltzustandes von dem "alten" "off"-Schaltzustand vor Durchlaufen des Temperaturprofils. Werden die Schaltbereiche des PDLC-Funktionselements 4 danach ein-("on") und wieder ausgeschaltet ("off), wird der erste "off"-Schaltzustand, welcher einem "frischen" Memory-Zustand entspricht, wieder hergestellt. Man möchte also immer den "frischen" Memory-Zustand ("off"-Schaltzustand) sicherstellen, sobald angrenzende Schaltbereiche ein- und wieder ausgeschaltet werden, da sich diese nach dem Ausschalten zwangsläufig in diesem "frischen" Memory-Zustand befinden.

Die Figuren 6 a) und b) zeigen eine schematische Darstellung des Schaltverhaltens des PDLC-Funktionselements 4 bei Anwendung des erfindungsgemäßen Verfahrens. Die Verglasungseinheit 100 dieses erfindungsgemäßen Beispiels entspricht in seinem prinzipiellen Aufbau, dem des Vergleichsbeispiels nach dem Stand der Technik aus Figur 5, so dass dazu auf die Beschreibung unter Figur 5 verwiesen wird.

Figur 6 a) zeigt analog zur Figur 5 a) einen alternierenden Schaltzustand, d.h. jeweils benachbarte Schaltbereiche weisen unterschiedliche Schaltzustände auf. So sind hier beispielsweise die Schaltbereiche S1, S3, S5, S7 und S9 mit dem Schaltzustand "off" beschaltet, was beispielsweise einer maximal Diffusität (Trübung oder Streuung) in der Durchsicht durch das PDLC-Funktionselement 4 im jeweiligen Schaltbereiche S1, S3, S5, S7 und S9 entspricht. Die jeweils unmittelbar benachbarten und nur durch eine Isolationslinie 8' zwischen den Elektrodensegmenten 8.1-8.9 (hier nicht im Detail dargestellt) voneinander getrennten Schaltbereiche S2, S4, S6 und S8 sind mit dem Schaltzustand "on" beschaltet, was beispielsweise einer minimalen diffusen Durchsicht (also einer maximalen Klarheit) entspricht.

Im Unterschied zum Vergleichsbeispiel nach dem Stand der Technik in Figur 5 a) und b), werden bei einer Änderung der Schaltzustände einzelner Schaltbereiche, zunächst alle Schaltzustände der Schaltbereiche S1-S9 auf den Schaltzustand "on" für beispielsweise eine Zeitdauer t von 0,5 s gesetzt (siehe Figur 6 b)). Anschließend werden beispielsweise alle Schaltbereiche S1-S9 durch Anlegen einer geeigneten Steuerspannung durch die Steuereinheit 10, auf den Schaltzustand "off" gesetzt.

Wie in Figur 6 c) zu sehen, weisen alle Schaltbereiche S1-S9 die gleichen optischen Eigenschaften und insbesondere die gleiche Diffusität auf - unabhängig davon, ob sie ursprünglich im Schaltzustand "on" (wie die Schaltbereiche S2, S4, S6, S8) oder bereits im Schaltzustand "off" (wie die Schaltbereiche S1, S3, S5, S7, S9) waren.

Es entsteht eine gleichmäßige Durchsicht, mit wenig Blendeffekten für den Fahrer oder weitere Insassen. Der unter Figur 5 a) und b) beschriebene Memory-Effekt kann unabhängig von der Temperatur T des PDLC-Funktionselements 4 wirksam vermieden werden.

Wie bereits erwähnt, tritt der genannte Memory-Effekt in gewissen Umfang immer und besonders bei Temperaturen über beispielsweise 50°C auf.

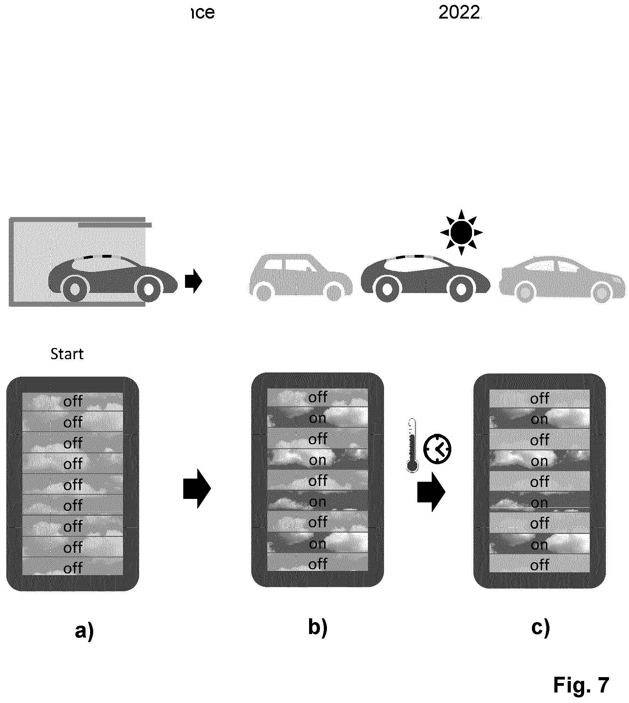

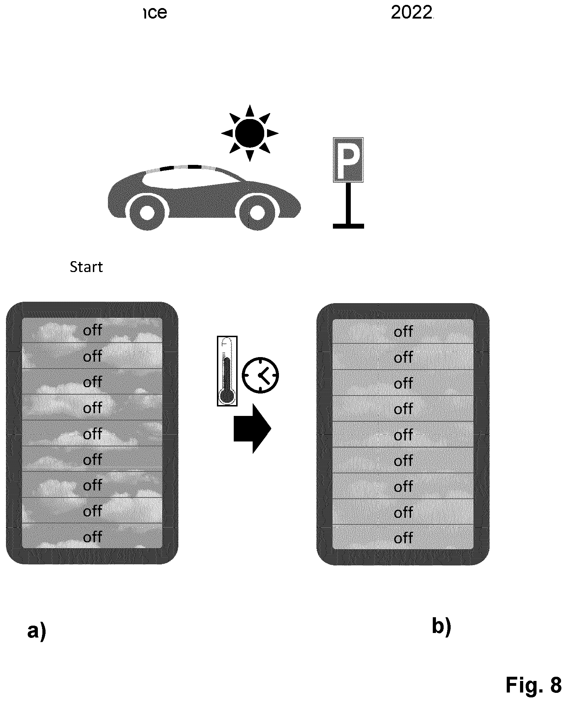

Ohne Einschränkung der Erfindung, tritt der Effekt besonders deutlich in Erscheinung bei den folgenden Ausgangskonstellationen:
Abhängig von wechselnden Temperaturen der Verglasungseinheit 100 in unterschiedlichen Anwendungsscenarios, kann es im Betrieb, oder zwischen zwei Einsätzen (Morgens/ Abends, nächster Tag) zu einer Änderung der optischen Eigenschaften im ausgeschalteten Zustand kommen. Die Figurn 7 a)-c) zeigen ein Szenario im Betrieb des Fahrzeugs. Die Figuren 8 a)-b) zwischen zwei Einsätzen.

Die Figuren 7 a)-c) zeigen schematisch die Ausgangskonstellation eines in einer Garage geparkten Fahrzeugs. In Figur 7 a) ist das Fahrzeug in einer (vergleichsweise kühlen) Garage geparkt; die Verglasungseinheit 100 mit PDLC-Funktionselement 4 befindet sich im Schaltzustand "off", ist also spannungslos und damit in einem diffusen Zustand.

Figur 7 b) zeigt eine Verglasungseinheit 100 mit alternierend "on"/"off"-geschalteten Schaltbereichen. Anschließend erwärmt sich die Verglasungseinheit 100, beispielsweise unter Sonneneinstrahlung und mit nur wenig Fahrtwind im Stadtverkehr, beispielsweise für eine Zeitdauer von ca. 2 h auf über 60°C.

Figur 7 c) zeigt die unter Temperatureinwirkung stehende Verglasungseinheit, wobei die nun lange "off"-geschalteten Schaltbereiche eine diffusere Durchsicht aufweisen als nach kurzem Einschaltzeit und kühlerem Zustand von Figur 7 b). Figur 7 c) entspricht nun beispielsweise dem Ausgangszustand aus Figur 5 a) des Vergleichsbeispiels nach dem Stand der Technik oder der Figur 6 a) des erfindungsgemäßen Beispiels.

Durch Anwendung des erfindungsgemäßen Verfahrens ergeben sich homogene optische Eigenschaften über die gesamte Fläche der Schaltbereiche.

Die Figuren 8 a) und b) zeigen schematisch eine weitere Ausgangskonstellation am Beispiel eines in der Sonne geparkten Fahrzeugs. In Figur 8 a) ist die Verglasungseinheit 100 vergleichsweise kalt und befindet sich im Schaltzustand "off", ist also spannungslos und damit in einem diffusen Zustand.

Figur 8 b) zeigt die Verglasungseinheit 100 nach einer Parkzeit von ca. 2h und einer Erwärmung aufgrund von Sonneneinstrahlung auf beispielsweise über 60°C. Figur 8 b) zeigt die Verglasungseinheit, nachdem diese eine Temperaturänderung erfahren hat. Die nun lange "off"-geschalteten Schaltbereiche weisen eine diffusere Durchsicht auf, als der Zustand vor der Temperatureinwirkung von Figur 8 a).

Wird nun ein alternierendes Schaltmuster wie in der Figur 5 a) oder 6 a) an die Verglasungseinheit 100 angelegt, und diese nach dem Stand der Technik wieder unmittelbar (ohne zwischengeschalteten "on"-Schaltzustand) komplett "off"-geschaltet, ergibt sich das Muster gemäß Figur 5 b). Die Schaltbereiche S1, S3, S5, S7, S9, die nicht "on"-geschaltet wurden, behalten eine stärkere Diffusität, als die Schaltbereiche S2, S4, S6, S8, die "on"- und anschließend wieder "off"-geschaltet wurden, da bei letztgenannten Schaltbereichen der Memory-Zustand nun wiederhergestellt ist.

Ein erfindungsgemäßes "on"-schalten aller Schaltbereiche (wie in Figur 6 b) dargestellt) stellt den Memory-Zustand des PDLC-Funktionselements wieder her, so dass bei anschließendem "off"-schalten aller Schaltbereiche, ein homogene optische Diffusität über die gesamte Fläche der Schaltbereiche entsteht (siehe Figur 6c).

### Bezugszeichenliste:

- 1: Außenscheibe
- 2: Innenscheibe
- 3: thermoplastische Zwischenschicht
- 3a: erste Schicht der Zwischenschicht 3
- 3b: zweite Schicht der Zwischenschicht 3
- 3c: dritte Schicht der Zwischenschicht 3
- 4: PDLC-Funktionselement, Funktionselement mit elektrisch steuerbaren optischen Eigenschaften
- 5: aktive Schicht des Funktionselements 4
- 6: erste Trägerfolie des Funktionselements 4
- 7: zweite Trägerfolie des Funktionselements 4
- 8: erste Flächenelektrode des Funktionselements 4
- 8.1, 8.2, 8.3, 8.4: Elektrodensegmente der ersten Flächenelektrode 8
- 8': Isolierungslinie zwischen zwei Elektrodensegmenten 8.1, 8.2, 8.3, 8.4
- 9: zweite Flächenelektrode des Funktionselements 4
- 10: Steuereinheit
- 11: Gleichspannungswandler
- 12: Wechselrichter
- 13: Abdeckdruck
- 14: elektrische Kabel
- 15: Spannungsquelle / Gleichspannungsquelle
- 100: Verglasungseinheit

- S1, S2, S3, S4, S5, S6, S7, S8, S9, Sn, Sn+1: Schaltbereich
- n: natürliche Zahl
- t: Zeitdauer
- T: Temperatur
- X-X': Schnittlinie
- Z: vergrößerter Bereich
- on, off: Schaltzustand

## Patentansprüche

1. Verfahren zur Steuerung eines PDLC-Funktionselements (4) mit mindestens zwei benachbarten, unabhängig schaltbaren Schaltbereichen (Sn,Sn+1 mit n = 1...8), wobei durch eine Steuereinheit (10) Schaltzustände (on, off) an die Schaltbereiche (Sn,Sn+1) angelegt werden können, wobei
A) an mindestens zwei benachbarte Schaltbereiche (Sn,Sn+1) unterschiedliche Schaltzustände (on, off) angelegt werden;
B) durch einen Benutzer oder eine automatische Steuerung ein Signal zur Änderung der Schaltzustände (on, off) in den einzelnen Schaltbereichen (Sn,Sn+1) an die Steuereinheit (10) gesendet wird;
**gekennzeichnet dadurch, dass**
C) zunächst alle Schaltbereiche (S1,S2,S3,S4,S5,S6,S7,S8,S9) auf den Schaltzustand "on" gesetzt werden; und
D) anschließend die geänderten Schaltzustände an die Schaltbereiche (S1,S2,S3,S4,S5,S6,S7,S8,S9) angelegt werden.

2. Verfahren nach Anspruch 1, wobei in Schritt C der Schaltzustand "on" in allen Schaltbereichen (S1,S2,S3,S4,S5,S6,S7,S8,S9) gleichzeitig angelegt wird.

3. Verfahren nach Anspruch 1, wobei in Schritt C der Schaltzustand "on" in den Schaltbereichen (S1,S2,S3,S4,S5,S6,S7,S8,S9) zu unterschiedlichen Zeiten angelegt wird, bevorzugt in einer rollierenden Funktion oder alternierenden Abfolge und insbesondere Schritt D erst durchgeführt wird, wenn jeder Schaltbereich (S1,S2,S3,S4,S5,S6,S7,S8,S9) mindestens einmal auf den Schaltzustand "on" gesetzt wurde.

4. Verfahren nach einem der Ansprüche 1 bis 3, wobei in Schritt C der Schaltzustand "on" in den Schaltbereichen (S1,S2,S3,S4,S5,S6,S7,S8,S9) für eine Zeitdauer t von größer oder gleich 1/60 s, bevorzugt größer oder gleich 0.5 s und insbesondere für 0.5 s bis 10 s gehalten wird.

5. Verfahren nach einem der Ansprüche 1 bis 4, wobei das Verfahren erneut durchgeführt wird, falls in Schritt D an mindestens zwei benachbarten Schaltbereiche (Sn,Sn+1) unterschiedliche Schaltzustände (on, off) angelegt werden,.

6. Verfahren nach einem der Ansprüche 1 bis 5, wobei die Temperatur T des PDLC-Funktionselements (4) bestimmt wird und die Schritte A-D nur durchgeführt werden, wenn die Temperatur T größer 40°C, bevorzugt größer 50°Cund besonders bevorzugt größer 60°C beträgt, und/oder die Temperatur T des PDLC-Funktionselements (4) bestimmt wird und die Schritte A-D nur durchgeführt werden, wenn nach dem letzten Anlegen des Schaltzustands "on" am PDLC-Funktionselement (4) ein Temperaturprofil durchlaufen wurde, bei dem die Temperatur T zu irgendeinem Zeitpunkt größer 40°C, bevorzugt größer 50°C und besonders bevorzugt größer 60°C betrug.

7. Verglasungseinheit (100) mit PDLC-Funktionselement (4), umfassend
• eine Verbundscheibe (101), umfassend:
∘ eine Außenscheibe (1) und eine Innenscheibe (2), die über mindestens eine thermoplastische Zwischenschicht (3) miteinander verbunden sind,
∘ ein PDLC-Funktionselement (4) mit mindestens zwei benachbarten, unabhängig schaltbaren Schaltbereichen (Sn,Sn+1 mit n = 1...8), welches zwischen der Außenscheibe (1) und der Innenscheibe (2) angeordnet ist, wobei
∘ das PDLC-Funktionselement (4) mindestens zwei benachbarten, unabhängig schaltbare Schaltbereiche (Sn,Sn+1 mit n = 1...8) aufweist,
und
• eine Steuereinheit (10) zur elektrischen Steuerung der optischen Eigenschaften der Schaltbereiche (S1,S2,S3,S4,S5,S6,S7,S8,S9) des PDLC-Funktionselements (4),
**dadurch gekennzeichnet, dass**
die Steuereinheit (10) dazu vorgesehen ist, ein Verfahren nach einem der Ansprüche 1 bis 6 durchzuführen.

8. Verglasungseinheit (100) nach Anspruch 7, wobei das PDLC-Funktionselement (4) eine aktive Schicht (5) mit elektrisch steuerbaren optischen Eigenschaften zwischen einer ersten Flächenelektrode (8) und einer zweiten Flächenelektrode (9) aufweist und die erste Flächenelektrode (8) durch mindestens eine Isolierungslinie (8') in mindestens zwei getrennte Elektrodensegmente (8.1, 8.2, 8.3, 8.4) aufgeteilt ist und jedes Elektrodensegment (8.1, 8.2, 8.3, 8.4) einen unabhängig schaltbaren Schaltbereich (Sn,Sn+1 mit n = 1...8) bildet.

9. Verglasungseinheit (100) nach Anspruch 8, wobei jedes Elektrodensegment (8.1, 8.2, 8.3, 8.4) der ersten Flächenelektrode (8) und die zweite Flächenelektrode (9) elektrisch mit der Steuereinheit (10) verbunden sind, so dass zwischen jedem Elektrodensegment (8.1, 8.2, 8.3, 8.4) der ersten Flächenelektrode (8) und der zweiten Flächenelektrode (9) unabhängig voneinander eine elektrische Spannung angelegt werden kann, um die optischen Eigenschaften des dazwischen befindlichen Abschnitts der aktiven Schicht (5) zu steuern.

10. Verglasungseinheit (100) nach Anspruch 8, wobei die zweite Flächenelektrode (9) keine Isolierungslinien (8') aufweist oder eine geringere Anzahl von Isolierungslinien (8') und infolgedessen eine geringere Anzahl von Elektrodensegmenten aufweist als die erste Flächenelektrode (8), so dass mindestens einem Elektrodensegment der zweiten Flächenelektrode (9) mehrere Elektrodensegmente (8.1, 8.2, 8.3, 8.4) der ersten Flächenelektrode (8) zugeordnet sind.

11. Verglasungseinheit nach einem der Ansprüche 7 bis 10, wobei die Verbundscheibe mit einem Temperatursensor ausgestattet ist, welcher derart mit der Steuereinheit (10) verbunden ist, dass die Steuereinheit (10) die Temperatur T der Verbundscheibe mittels des Temperatursensors ermitteln kann oder die Steuereinheit (10) geeignet ist, die Impedanz der aktiven Schicht (5) zu bestimmen und daraus die Temperatur T der Verbundscheibe zu ermitteln.

12. Verglasungseinheit nach einem der Ansprüche 7 bis 11, wobei die mindestens eine Isolierungslinie (8') eine Breite von 5 µm bis 500 µm und insbesondere eine Breite von 20 µm bis 200 µm aufweist.

13. Fahrzeug, insbesondere Personenkraftwagen, mit einer Verglasungseinheit (100) nach Anspruch 7 bis 12.

14. Verwendung eines Verfahrens nach einem der Ansprüche 1 bis 6 zur Steuerung eines PDLC-Funktionselements (4) in einer Verglasungseinheit (100), bevorzugt als Fensterscheibe eines Fahrzeugs, insbesondere als Windschutzscheibe oder Dachscheibe.

## Claims

1. A method for controlling a PDLC functional element (4) having at least two adjacent, independently switchable switching regions (Sn, Sn+1 where n = 1...8), wherein switching states (on, off) can be applied to the switching regions (Sn, Sn+1) by a control unit (10), wherein
A) different switching states (on, off) are applied to at least two adjacent switching regions (Sn,Sn+1);
B) a signal is sent to the control unit (10) by a user or an automatic control to change the switching states (on, off`) in the individual switching regions (Sn,Sn+1);
**characterized in that**
C) first all switching regions (S1,S2,S3,S4,S5,S6,S7,S8,S9) are set to the "on" switching state; and
D) the changed switching states are then applied to the switching regions (S1,S2,S3,S4,S5,S6,S7,S8,S9).

2. The method according to claim 1, wherein in step C the "on" switching state is applied in all switching regions (S1,S2,S3,S4,S5,S6,S7,S8,S9) simultaneously.

3. The method according to claim 1, wherein in step C the "on" switching state is applied in the switching regions (S1,S2,S3,S4,S5,S6,S7,S8,S9) at different times, preferably in a rolling function or alternating sequence and, in particular, step D is carried out only after each switching region (S1,S2,S3,S4,S5,S6,S7,S8,S9) has been set to the "on" switching state at least once.

4. The method according to one of claims 1 to 3, wherein in step C the "on" switching state is held in the switching regions (S1,S2,S3,S4,S5,S6,S7,S8,S9) for a time period t of greater than or equal to 1/60 s, preferably greater than or equal to 0.5 s and in particular for 0.5 s to 10 s.

5. The method according to one of claims 1 to 4, wherein the method is carried out again if in step D different switching states (on, off) are applied to at least two adjacent switching regions (Sn, Sn+1).

6. The method according to one of claims 1 to 5, wherein the temperature T of the PDLC functional element (4) is determined and steps A-D are carried out only if the temperature T is greater than 40 °C, preferably greater than 50 °C and particularly preferably greater than 60 °C, and/or the temperature T of the PDLC functional element (4) is determined and steps A-D are carried out only if, after final application of the "on" switching state to the PDLC functional element (4), a temperature profile was passed through in which the temperature T at some point in time was greater than 40 °C, preferably greater than 50 °C and particularly preferably greater than 60 °C.

7. A glazing unit (100) with a PDLC functional element (4), comprising
□ a laminated pane (101), comprising:
∘ an outer pane (1) and an inner pane (2), which are connected to one another via at least one thermoplastic intermediate layer (3),
∘ a PDLC functional element (4) with at least two adjacent, independently switchable switching regions (Sn, Sn+1 where n = 1...8), which is arranged between the outer pane (1) and the inner pane (2), wherein
∘ the PDLC functional element (4) has at least two adjacent, independently switchable switching regions (Sn,Sn+1 where n = 1...8),
and
□ a control unit (10) for electrically controlling the optical properties of the switching regions (S1,S2,S3,S4,S5,S6,S7,S8,S9) of the PDLC functional element (4), **characterized in that** the control unit (10) is provided to carry out a method according to one of claims 1 to 6.

8. The glazing unit (100) according to claim 7, wherein the PDLC functional element (4) has an active layer (5) with electrically controllable optical properties between a first planar electrode (8) and a second planar electrode (9) and the first planar electrode (8) is divided into at least two separate electrode segments (8.1, 8.2, 8.3, 8.4) by at least one isolation line (8') and each electrode segment (8.1, 8.2, 8.3, 8.4) forms an independently switchable switching region (Sn, Sn+1 where n = 1...8).

9. The glazing unit (100) according to claim 8, wherein each electrode segment (8.1, 8.2, 8.3, 8.4) of the first planar electrode (8) and the second planar electrode (9) are electrically connected to the control unit (10), so that an electrical voltage can be applied between each electrode segment (8.1, 8.2, 8.3, 8.4) of the first planar electrode (8) and the second planar electrode (9), independently of one another, in order to control the optical properties of the section of the active layer (5) located therebetween.

10. The glazing unit (100) according to claim 8, wherein the second planar electrode (9) has no isolation lines (8') or a smaller number of isolation lines (8') and consequently a smaller number of electrode segments than the first planar electrode (8), so that at least one electrode segment of the second planar electrode (9) is assigned several electrode segments (8.1, 8.2, 8.3, 8.4) of the first planar electrode (8).

11. The glazing unit according to one of claims 7 to 10, wherein the laminated pane is equipped with a temperature sensor which is connected to the control unit (10) in such a way that the control unit (10) can determine the temperature T of the laminated pane by means of the temperature sensor, or the control unit (10) is suitable for determining the impedance of the active layer (5) and for determining the temperature T of the laminated pane therefrom.

12. The glazing unit according to one of claims 7 to 11, wherein the at least one isolation line (8') has a width of 5 µm to 500 µm, and in particular a width of 20 µm to 200 µm.

13. A vehicle, in particular passenger vehicle, having a glazing unit (100) according to one of claims 7 to 12.

14. Use of a method according to one of claims 1 to 6 for controlling a PDLC functional element (4) in a glazing unit (100), preferably as a window pane of a vehicle, in particular as a windshield or roof pane.

## Revendications

1. Procédé de commande d'un élément fonctionnel PDLC (4) comportant au moins deux zones de commutation adjacentes (Sn, Sn+1, où n = 1...8) pouvant être commutées indépendamment, dans lequel des états de commutation (marche, arrêt) peuvent être appliqués aux zones de commutation (Sn, Sn+1) par une unité de commande (10), dans lequel
A) différents états de commutation (marche, arrêt) sont appliqués à au moins deux zones de commutation adjacentes (Sn, Sn+1);
B) un signal est envoyé à l'unité de commande (10) par un utilisateur ou par une commande automatique afin de modifier les états de commutation (marche, arrêt) dans les différentes zones de commutation (Sn, Sn+1);
**caractérisé en ce que**
C) toutes les zones de commutation (S1, S2, S3, S4, S5, S6, S7, S8, S9) sont d'abord mises à l'état de commutation « activé »; et
D) les états de commutation modifiés sont ensuite appliqués aux zones de commutation (S1, S2, S3, S4, S5, S6, S7, S8, S9).

2. Procédé selon la revendication 1, dans lequel, à l'étape C, l'état de commutation « activé » est appliqué simultanément dans toutes les zones de commutation (S1, S2, S3, S4, S5, S6, S7, S8, S9).

3. Procédé selon la revendication 1, dans lequel, à l'étape C, l'état de commutation « activé » est appliqué dans les zones de commutation (S1, S2, S3, S4, S5, S6, S7, S8, S9) à des moments différents, de préférence selon une fonction progressive ou une séquence alternée, et, en particulier, l'étape D n'est exécutée qu'après que chaque zone de commutation (S1, S2, S3, S4, S5, S6, S7, S8, S9) a été mise au moins une fois dans l'état de commutation « activé ».

4. Procédé selon l'une des revendications 1 à 3, dans lequel, à l'étape C, l'état de commutation « activé » est maintenu dans les zones de commutation (S1, S2, S3, S4, S5, S6, S7, S8, S9) pendant une durée t supérieure ou égale à 1/60 s, de préférence supérieure ou égale à 0,5 s et en particulier comprise entre 0,5 s et 10 s.

5. Procédé selon l'une des revendications 1 à 4, dans lequel le procédé est répété si, à l'étape D, des états de commutation différents (activé, désactivé) sont appliqués à au moins deux zones de commutation adjacentes (Sn, Sn+1).

6. Procédé selon l'une des revendications 1 à 5, dans lequel la température T de l'élément fonctionnel PDLC (4) est déterminée et les étapes A à D ne sont exécutées que si la température T est supérieure à 40 °C, de préférence supérieure à 50 °C et de manière particulièrement préférée supérieure à 60 °C, et/ou la température T de l'élément fonctionnel PDLC (4) est déterminée et les étapes A à D ne sont exécutées que si, après l'application finale de l'état de commutation « activé » à l'élément fonctionnel PDLC (4), un profil de température a été parcouru dans lequel la température T, à un moment donné, était supérieure à 40 °C, de préférence supérieure à 50 °C et de manière particulièrement préférée supérieure à 60 °C.

7. Un vitrage (100) comportant un élément fonctionnel PDLC (4), comprenant
• une vitre feuilletée (101), comprenant:
∘ une vitre extérieure (1) et une vitre intérieure (2), qui sont reliées l'une à l'autre par au moins une couche intermédiaire thermoplastique (3),
∘ un élément fonctionnel PDLC (4) comportant au moins deux zones de commutation adjacentes et commutables indépendamment (Sn, Sn+1, où n = 1...8), qui est disposé entre la vitre extérieure (1) et la vitre intérieure (2), dans lequel
∘ l'élément fonctionnel PDLC (4) comporte au moins deux zones de commutation adjacentes et commutables indépendamment (Sn, Sn+1, où n = 1...8),
et
• une unité de commande (10) destinée à commander électriquement les propriétés optiques des zones de commutation (S1, S2, S3, S4, S5, S6, S7, S8, S9) de l'élément fonctionnel PDLC (4),
**caractérisé en ce que** l'unité de commande (10) est prévue pour mettre en œuvre un procédé selon l'une des revendications 1 à 6.

8. Un vitrage (100) selon la revendication 7, dans laquelle l'élément fonctionnel PDLC (4) comporte une couche active (5) dont les propriétés optiques sont contrôlables électriquement, située entre une première électrode plane (8) et une deuxième électrode plane (9), et la première électrode plane (8) est divisée en au moins deux segments d'électrode distincts (8.1, 8.2, 8.3, 8.4) par au moins une ligne d'isolation (8') et chaque segment d'électrode (8.1, 8.2, 8.3, 8.4) forme une zone de commutation commutable indépendamment (Sn, Sn+1 où n = 1...8).

9. Un vitrage (100) selon la revendication 8, dans laquelle chaque segment d'électrode (8.1, 8.2, 8.3, 8.4) de la première électrode plane (8) ainsi que la deuxième électrode plane (9) sont reliés électriquement à l'unité de commande (10), de sorte qu'une tension électrique peut être appliquée entre chaque segment d'électrode (8.1, 8.2, 8.3, 8.4) de la première électrode plane (8) et de la deuxième électrode plane (9), indépendamment l'une de l'autre, afin de contrôler les propriétés optiques de la section de la couche active (5) située entre celles-ci.

10. Un vitrage (100) selon la revendication 8, dans laquelle la deuxième électrode plane (9) ne comporte pas de lignes d'isolation (8') ou comporte un nombre plus faible de lignes d'isolation (8') et, par conséquent, un nombre plus faible de segments d'électrode que la première électrode plane (8), de sorte qu'au moins un segment d'électrode de la deuxième électrode plane (9) est associé à plusieurs segments d'électrode (8.1, 8.2, 8.3, 8.4) de la première électrode plane (8).

11. Un vitrage selon l'une des revendications 7 à 10, dans laquelle le vitrage feuilleté est équipé d'un capteur de température qui est relié à l'unité de commande (10) de telle sorte que l'unité de commande (10) puisse déterminer la température T du vitrage feuilleté au moyen du capteur de température, ou que l'unité de commande (10) soit apte à déterminer l'impédance de la couche active (5) et à déterminer la température T du vitrage feuilleté à partir de celle-ci.

12. Un vitrage selon l'une des revendications 7 à 11, dans lequel la au moins une ligne d'isolation (8') présente une largeur comprise entre 5 µm et 500 µm, et en particulier une largeur comprise entre 20 µm et 200 µm.

13. Véhicule, en particulier véhicule de tourisme, comportant un vitrage (100) selon l'une des revendications 7 à 12.

14. Utilisation d'un procédé selon l'une des revendications 1 à 6 pour commander un élément fonctionnel PDLC (4) dans un vitrage (100), de préférence en tant que vitre d'un véhicule, en particulier en tant que pare-brise ou vitre de toit.
